# EUROPÄISCHE PATENTSCHRIFT

(11) **EP 1 083 069 B1**
(45) Veröffentlichungstag und Bekanntmachung des Hinweises auf die Patenterteilung: **02.07.2003**
(21) Anmeldenummer: 00250262.3
(22) Anmeldetag: 03.08.2000
(51) Int. Cl.: B60J 5/04

(54) **Trägerelement zur Aufnahme von Funktionseinheiten einer Kraftfahrzeugtür sowie Verfahren zu dessen Herstellung**
Support for receiving functional units for a motor vehicle door and its production method
Elément support pour incorporation d'unités fonctionnelles d'une porte de véhicule et sa méthode de production

(30) Priorität: 03.08.1999 DE 19937000
(43) Veröffentlichungstag der Anmeldung: 14.03.2001
(73) Patentinhaber: Brose Fahrzeugteile GmbH & Co. KG Coburg, 96450 Coburg (DE)
(72) Erfinder: Kaps, Robert, 96450 Coburg (DE); Mantel, Martin, 96123 Naisa (DE); Feder, Roland, 96479 Weitramsdorf (DE); Kämmler, Georg, 70439 Stuttgart (DE)
(74) Vertreter: Baumgärtel, Gunnar, Dr.

(56) Entgegenhaltungen:
- EP-A- 0 495 712
- WO-A-98/42527
- DE-A- 19 622 310
- DE-A- 19 632 550
- FR-A- 2 762 262
- US-A- 4 848 829
- US-A- 5 395 135

## Beschreibung

Die Erfindung betrifft ein Trägerelement zur Aufnahme von Funktionseinheiten einer Kraftfahrzeugtür nach dem Oberbegriff des Anspruchs 1 sowie ein Verfahren zum Herstellen eines Trägerelements nach dem Oberbegriff der Ansprüche 45 und 48. Ein Trägerelement mit Herstellungsverfahren dieser Art ist in EP 0495712 A offenbart.

Aus der DE 196 22 310 A1 ist eine an ein Türinnenblech montierbare Trägerplatte zur Aufnahme mehrerer Funktionseinheiten bekannt. Auf dieser Trägerplatte werden beispielsweise die Führungsschienen samt Umlenkrollen eines Fensterhebers, der Fensterheberantrieb, das Schloß sowie der Entriegelungsmechanismus befestigt. In eine entsprechende Aussparung der Trägerplatte wird ein Lautsprecher eingesetzt und über Befestigungsmittel, üblicherweise Schrauben, fest mit dieser verbunden.

Diese Art der Trägerplatten werden aus einem Blechzuschnitt hergestellt, in dem vor der Montage der Funktionseinheiten die jeweils notwendigen Durchbrüche oder Öffnungen eingearbeitet werden. Dies geschieht üblicherweise durch Stanzen oder Bohren. Ebenfalls vor der Montage der Funktionseinheiten werden über Umformverfahren gegebenenfalls Sicken oder räumliche Konturen des Blechzuschnittes ausgebildet.

Nachteilig an solchen Trägerplatten sind der hohe Montageaufwand bei der Anbringung der Funktionseinheiten sowie die Beschränkungen bezüglich der räumlichen Gestaltung bei der Umformung, da aus werkstoff- und fertigungstechnischen Gründen keine beliebige Formgebung möglich ist.

Aus der DE 196 32 550 A1 ist ein Bauelement für eine Karosserie von Kraftfahrzeugen bekannt, bei dem ein dünnwandiges Wandteil vollflächig mit einem Formkörper verbunden wird, wobei der Formkörper aus einem aufgeschäumten Bindemittel besteht, in das Bewehrungsmittel in Gestalt von nachwachsenden Rohstoffen eingelagert sind. Nachteilig an dem Bauelement ist der Montageaufwand für das Verbinden des Formkörpers mit dem Wandteil sowie die beschränkte Möglichkeit der Aufnahme von Funktionselementen.

Aufgabe der vorliegenden Erfindung ist es, ein Trägerelement und ein Verfahren zu dessen Herstellung bereitzustellen, das eine beliebige Formgebung zuläßt und mit geringen Kosten herstellbar ist.

Erfindungsgemäß wird diese Aufgabe durch ein Trägerelement mit den Merkmalen des Anspruchs 1 sowie durch ein Verfahren zur Herstellung eines Trägerelements mit den Merkmalen der Ansprüche 45 bzw. 48 gelöst.

Durch das erfindungsgemäße Trägerelement können auf einfache Weise komplexe Geometrien verwirklicht werden, ohne daß mehrere Verfahrensschritte durchlaufen werden müssen. Auch Schwankungen in der Dicke des Trägerelements, die beispielsweise aufgrund von Designanforderungen erforderlich sind, sind ohne weiteres möglich. Darüber hinaus ist eine Gewichtseinsparung durch die Verwendung leichter Kunststoffschäume realisierbar. Unter einem Schaumstoff werden hierbei geschäumte Werkstoffe verstanden, insbesondere Kunststoffschäume, mit denen eine ausreichende Stabilität erzielt werden kann. Grundsätzlich sind auch Metallschäume einsetzbar.

Durch die Ausgestaltung der Außenhaut mit einer im Verhältnis zu dem Schaumkern höheren Festigkeit und der einstückigen Ausbildung des Teiles oder der Teile des Trägerelementes, das/die aus Schaumstoff hergestellt ist/sind, wird der aus Schaumstoff bestehenden Teil unmittelbar einsetzbar.

Eine weitere Montage einer separaten Außenhaut, die aus einem anderen Material hergestellt wurde, ist nicht mehr notwendig. Die höhere Festigkeit der Außenhaut schützt den Schaumkern und bewirkt eine Schutzfunktion der Insassen bei einem Seitenaufprall.

In einer Weiterbildung der Erfindung umschließt die Außenhaut den Schaumkern vollständig. Es entsteht dadurch eine geschlossene, einteilige Oberfläche ohne schwächende Verbindungsstellen oder Übergängen, wodurch sich die Stabilität des aus Schaumstoff bestehenden Teiles des Trägerelementes erhöht.

In einer vorteilhaften Ausgestaltung der Erfindung ist der aus Schaumstoff bestehende Teil des Trägerelements zur Aufnahme von mindestens einer Funktionseinheit, wie Fensterheberantrieb, Fensterheberschienen bzw. Führungsschienen, einem Türschloß oder einem Lautsprecher, der Kraftfahrzeugtür vorgesehen.

Zur Erreichung einer ausreichenden Stabilität des Trägerelementes ist der Schaumstoff als Hartschaumstoff ausgebildet. Dadurch wird der Schutz bei einem Seitenaufprall erhöht und die in oder an dem Schaumstoffteil angeordneten Funktionseinheiten werden fest in der Kraftfahrzeugtür positioniert. Als Schaumstoff kann ein Schaumkunststoff verwendet werden, beispielsweise ein expandierendes Polypropylen (EPP) oder ein expandierendes Polyethylen (EPE).

In einer Variante der Erfindung besteht das Schaumstoffteil aus einem geschäumten Kunststoff, dessen Hohlräume, ausgehend von einem Mittenbereich des Schaumkörpers, in Richtung einer geschlossenen Außenhaut ein konstantes oder ein sich verringerndes Volumen aufweisen. Die Verringerung der Gasblasendurchmesser, durch die das Volumen bzw. die Dichte des Schaumstoffes definiert wird, kann entweder kontinuierlich oder in Abstufungen erfolgen. Durch eine geschlossene Außenhaut läßt sich eine Art ausgeschäumter Hohlkörper in einem Arbeitsgang herstellen, wodurch das Trägerelement eine vergleichsweise hohe Eigensteifigkeit erhält. Während im Innenbereich des Schaumkörpers eine relativ geringe Dichte aufgrund der größeren Durchmesser der Gasblasen oder Poren herrscht, wird in der Außenhaut der Gasblasendurchmesser möglichst verringert, im Extremfall wird die Porengröße auf Null reduziert. Dadurch vergrößert sich die Dichte der Außenhaut im Verhältnis zu dem Schaumkern, so daß insbesondere die statische Festigkeit und Stabilität des Trägerelementes erhöht wird, da in den Bereichen der höchsten Belastung am meisten Material angeordnet ist. Eine solche Ausgestaltung entspricht den Konstruktionsprinzipien des Leichtbaues optimal, die das Material an den Stellen oder in den Bereichen angeordnet sehen wollen, wo es zur Aufnahme oder Weiterleitung von Kräften benötigt wird. Ähnlich einem Doppel-T-Träger, bei dem das meiste Material an den äußeren Ebene angeordnet ist, ist bei dem vorliegenden Trägerelement der Bereich der Außenhaut mit besonders viel bzw. mit einem Material hoher Dichte versehen, wobei die Außenhaut eine Dicke von bis zu mehreren Millimetern aufweisen kann, je nachdem, wie große die aufzunehmenden Kräfte sind. Sollen lediglich Leitungen oder kleiner Bauteil an dem Trägerelement angebracht werden, kann die Außenhaut auch sehr dünn dimensioniert werden, also lediglich einen Bruchteil eines Millimeters stark, wohingegen bei einer Befestigung einer Fensterheberschiene die Außenhaut auch mehrere Millimeter dick sein kann.

Weiterhin wird das Bauteilgewicht aufgrund der geringeren Dichte im Vergleich zu herkömmlichen Kunststoffmodulen mit einer konstanten Gasblasengröße reduziert und ein zusätzlicher Schalldämmungseffekt kann erreicht werden. Darüber hinaus treten bei diesem Trägerelement keine Einfallstellen bei Sprüngen in der Materialstärke auf, die bei herkömmlichen Kunststoffmodulen zu beobachten sind.

Je nach dem Verhältnis von Kunststoff und verwendetem Treibmittel kann die Dicke der geschlossenen Außenhaut variiert werden, wodurch das Trägerelement einfach und kostengünstig an veränderte Vorgaben, beispielsweise bezüglich der Festigkeit oder der Schalldämmung, angepaßt werden kann. Ebenso ist es möglich, über eine entsprechende Temperaturführung der Kunststoffschmelze bzw. des Werkzeuges, beispielsweise durch Kühlen des Werkzeuges, die Dicke der Außenhaut zu beeinflussen.

Vorteilhafterweise besteht das Schaumstoffteil aus einem Kunststoff-Sandwich-Körper, mit einem Schaumkern geringer Dichte und einer vollflächigen, kompakten Außenhaut, wodurch eine große Festigkeit in Verbindung mit einem geringen Gewicht verwirklicht wird.

Um einen möglichst hohen Integrationsgrad bei der Fertigung des Trägerelements zu erreichen, sind vorteilhafterweise Verbindungsteile für Funktionseinheiten wie Fensterheberführungsschienen einstückig in dem Schaumstoffteil integriert, wobei auch die Funktionseinheiten selbst von dem Schaumstoff ganz oder teilweise umspritzt sind.

In einer Weiterbildung der Erfindung ist das Trägerelement zur Aufnahme zumindest von Teilen eines Fensterhebers wie Führungsschienen oder Antriebseinrichtungen vorgesehen. In das Schaumstoffteil ist dabei eine Führungsschiene eingeschäumt, wobei der die Stützflächen für die Mitnehmer eines Fensterhebers aufweisende Führungsbereich der Führungsschiene über die Außenhaut des Schaumstoffteils hinausragt. Eine andere Ausbildung sieht vor, daß der Schließmechanismus des Schlosses aus dem Schaumstoffteil herausragt.

Zur Gewährleistung einer sicheren Befestigung des Trägerelements an dem Türrahmen oder dem Türinnenblech ist vorteilhafterweise in dem Schaumstoffteil ein Befestigungsmittel eingeschäumt, das das Trägerelement über einen Befestigungspunkt festlegt. Ein solches Befestigungsmittel, wie eine Schraube oder eine Schnappelement, kann vollständig innerhalb des Schaumstoffteils angeordnet sein, und über eine eingeschäumte Metall- oder Kunststoffplatte mit einer Bohrung für den Durchgang der Schraub- oder Schnappverbindung die Befestigung realisieren. Alternativ dazu kann der Befestigungspunkt auch außerhalb der Kontur des Schaumstoffteils liegen, wobei nur ein Teil des Befestigungsmittels eingeschäumt ist. Vorteilhafterweise ist der Befestigungspunkt an der Führungsschiene ausgebildet, so daß durch das Einschäumen der Führungsschiene gleichzeitig das Befestigungsmittel des Trägerelements eingearbeitet wird. Die Führungsschiene kann dabei vollständig oder nur teilweise eingeschäumt bzw. umspritzt sein.

Somit wird das Schaumstoffteil über die Funktionseinheiten am Türinnenblech oder Türrahmen befestigt werden, wodurch die auftretenden Kräfte z.B. beim Schließen der Tür über die Funktionseinheiten und nicht über das Schaumstoffteil weitergeleitet werden müssen. Zur besseren Einbettung bzw. Integration der Funktionseinheiten oder Verbindungsteile in das Schaumstoffteil sind als Verbindungsstellen Ausnehmungen vorgesehen, die beispielsweise als Anspritzpunkte ausgebildet sind.

Alternativ zum Einschäumen oder in Verbindung damit ist in einer Ausgestaltung der Erfindung in dem Schaumstoffteil mindestens eine Aussparung zur Aufnahme oder Ausbildung einer Funktionseinheit der Kraftfahrzeugtür vorgesehen. Die Aussparung kann beispielsweise durch einen Hohlraum gebildet werden und einen Antriebsmotors oder eine mit dem Antriebsmotor gekoppelten Getriebeeinheit aufnehmen. Es können mittels der Aussparungen oder Hohlräume insbesondere solche Funktionseinheiten aufgenommen werden, die erst nach der Fertigung des Schaumstoffteils montiert werden. Diese Funktionseinheiten werden auch Einbauteile genannt und sind beispielsweise ein Schloßkörper oder ein Lautsprecher. Vorgesehen ist auch, daß in dem Schaumstoffteil ein Führungsabschnitt ausgeformt ist, der zur Aufnahme eines Türschlosses dient.

In dem Schaumstoffteil ist zur Erhöhung des Integrationsgrades bzw. zur Verbesserung der Akustik ein Hohlraum integriert, der als Luftführung oder als Resonanzraum für den Lautsprecher dient.

Zur Erhöhung der Steifigkeit und zur gleichmäßigen und großflächigen Verteilung von Kräften auf das Trägerelement sind Versteifungsrippen oder Stege vorgesehen, die von den Funktionseinheiten oder Hohlräumen für Einbauteile abzweigen und von der Außenhaut des Schaumstoffteils abstehen. Dabei ist es günstig, daß die Versteifungsrippen oder Stege senkrecht zur Längserstreckung der Funktionseinheiten (z.B. Führungsschienen), der Verbindungsteile bzw. der Hohlräume für Einbauteile angeordnet sind, um Kräfte gleichmäßig verteilen zu können. Alternativ dazu können die Versteifungsrippen oder Stege strahlenförmig von den Funktionseinheiten, Verbindungsteilen oder Hohlräumen für Einbauteile ausgehen.

Aus Gründen der Materialeinsparung und der Anpassung an der Kraftverlauf nimmt die Höhe der Versteifungsrippen oder Stege, von den Funktionseinheiten, Verbindungsteilen oder Hohlräumen ausgehend, kontinuierlich ab, wobei der Übergang der Versteifungsrippen oder Stege in die Außenhaut des Schaumstoffteils fließend erfolgt.

Durch eine Abstützung von Funktionseinheiten, auf die im wesentlichen senkrecht zur Fläche des Trägerelements Kräfte ausgeübt werden, durch andere Funktionseinheiten wird erreicht, daß sich die Maximalbelastung auf das Schaumstoffteil verringert und eine entsprechend geringere Materialstärke vorgesehen werden kann.

Zur Erhöhung des Integrationsgrades und der damit einhergehenden Vereinfachung und Kostenreduzierung der Montage des Trägerelements und der kompletten Kraftfahrzeugtür ist die Einarbeitung von Schnappverbindungen, Führungskanälen bzw. Montagehilfen zur Aufnahme oder Montage von Funktionseinheiten, Einbauteilen, Kabeln oder dergleichen in das Schaumstoffteil vorgesehen. Ebenso kann eine Wasserablaufrinne in das Schaumstoffteil integriert sein.

Zur einfachen Trennung von Trocken- und Naßraum innerhalb der Kraftfahrzeugtür, ist an das Trägerelement mindestens ein Dichtungsabschnitt angeformt, der zur Abdichtung des Kontaktbereiches zwischen dem Trägerelement und dem tragenden Teil der Kraftfahrzeugtür dient. Vorteilhafterweise wird der Dichtungsabschnitt durch einen deformierbaren, zweckmäßigerweise elastischen Bereich des Schaumstoffteils gebildet.

Weiterhin können Kabelbäume oder zumindest ein elektrischer Leiter in dem Schaumstoffteil eingeschäumt oder eingespritzt werden, so daß lediglich eine Steckerkontaktierung an den Schnittstellen erfolgen muß, was den Montageaufwand reduziert.

Zur Stabilisierung des Trägerelements ist in dem Schaumstoffteil mindestens ein Verstärkungselement eingearbeitet. Dieses Verstärkungselement kann als Träger des Schloßkörpers öder als eine Halteplatte für einen Türgriff ausgebildet sein, wodurch die Steifigkeit des kompletten Trägerelements erhöht und eine bessere Kraftverteilung erreicht wird. Das Verstärkungselement ist dabei aus Kunststoff oder Metall ausgeführt und kann seinerseits auch als ein elektrischer Leiter dienen.

Alternativ zu einer Einbettung eines Verstärkungselementes ist vorgesehen, daß in oder an der Außenhaut des Schaumstoffteils Verstärkungsmaterial angeordnet ist. Dieses Verstärkungsmaterial besteht zur Gewährleistung der Designfreiheit bei gleichzeitigen Beibehaltung des Vorteils eines geringen Gewichts aus Faserstoffen wie Matten oder Geweben. Dabei werden vorzugsweise nachwachsende Rohstoffe wie Hanf oder synthetische Werkstoffen wie Glas- oder Kohlefaser eingesetzt. Um das Verstärkungsmaterial einfach mit dem Schaumstoffteil verbinden zu können, ist es von dem Werkstoff des Schaumstoffteils durchsetzt, so daß durch Einlegen in die Gußform der Schaumstoffteils bei dem Befüllen der Form oder durch nachträgliches Auflegen der Matten oder Gewebe und Erwärmen eine stoffschlüssige Verbindung entsteht. Dabei ist es günstig, das Verstärkungsmaterial lediglich an mechanisch belasteten Stellen des Trägerelements anzuordnen.

Weiterhin sind in dem Schaumstoffteil Bereiche vorgesehen, die als Seitenaufprallschutz zur Aufnahme von Energie im Crash-Fall dienen. Das Trägerelement ist vorteilhafterweise zwischen dem Naßraum und dem Trockenraum des Fahrzeugs angeordnet und bewirkt eine Trennung des Naßraumes von dem Trockenraum der Kraftfahrzeugtür. Dazu besteht das Schaumstoffteil aus einem wasserdichten Material oder ist mit einer entsprechenden Beschichtung zu einem der beiden Räume hin versehen.

Eine Ausbildung des Trägerelements als Trägerplatte eines Türmoduls, das komplett montiert an der Kraftfahrzeugtür befestigbar ist, reduziert die Kosten bei der Herstellung einer Kraftfahrzeugtür durch Verringerung der Montageverrichtungen und vereinfacht den Transport aufgrund der Reduzierung der Teilezahl.

Eine bevorzugte Ausgestaltung der Erfindung sieht eine Kraftfahrzeugtür vor, mit einem erfindungsgemäßen Trägerelement, das nach zumindest einer der vorbeschriebene Ausgestaltungen oder Weiterbildungen ausgebildet ist.

Das erfindungsgemäße Verfahren ermöglicht die Fertigung von leichten und gleichzeitig stabilen Türmodulen mit einer kompakten, glatten Außenhaut und einem Schaumkern, der im Vergleich zu der Außenhaut eine geringere Dichte aufweist. Auf diese Weise ergibt sich eine Sandwich-Struktur des Trägerelements mit zumindest zwei Schichten, nämlich der Außenhaut und dem Schaumkern, die unterschiedliche Eigenschaften aufweisen. Schwankungen bzw. Sprünge in der Schichtdicke von bis zu 8 mm und Wandstärken bis zu 20mm sind im Gegensatz zu dem herkömmlichen Kompaktspritzgießverfahren einfach zu realisieren. Bei Materialanhäufungen treten zudem bei der Herstellung des Trägerelements keine Einfallstellen auf, wodurch die Gestaltungsfreiheit erhöht und eine optimale Anpassung der Form des Trägerelements an den gewünschten Einsatzzweck erreicht werden kann.

Durch eine Variation in der Zusammensetzung oder Dosierung des Treibmittelzusatzes bzw. durch die Steuerung des Abkühlungsprozesses können die Hohlräume des Schaumkerns ein gezielt einstellbares Volumen annehmen. Vom Kern des Schaumstoffteils ausgehend ist entweder eine gleichbleibende Dichte des Schaumes, also ein konstantes Volumen der Schaumhohlräume vorhanden oder die Dichte des Schaumstoffteils erhöht sich in Richtung der vollflächigen, kompakten Außenhaut, so daß nach außen hin das Material an Festigkeit zunimmt. Insbesondere durch die letztgenannte Alternative ist eine erhebliche Reduzierung des Bauteilgewichtes möglich, wobei die Festigkeit des Bauteiles, hier des Trägerelements, nicht reduziert wird.

In vorteilhaften Ausgestaltungen des Verfahrens kann die Dichte des Schaumstoffteils durch Zusammenfahren des Werkzeugs erhöht bzw. durch Auseinanderfahren des Werkzeugs verringert werden, wodurch sich die jeweiligen Schichtdikken, also die Abmessungen der Außenhaut und die Stärke und Dichte des Schaumkernes bedarfsweise einstellen lassen.

Alternativ zu der Verwendung des oben beschriebenen TSG-Verfahrens wird das Schaumstoffteil unter Verwendung eines expandierenden Polypropylen oder eines expandierenden Polyethylen hergestellt. Eine Variation der Dicke der Außenhaut bzw. der mechanischen Eigenschaften des Schaumstoffteils wird dabei durch ein Anschmelzen der Oberflächen des Schaumstoffteils erreicht. Bei dem Anschmelzen der Oberflächen, beispielsweise durch entsprechendes Erwärmen des Werkzeuges, hier der Gußform, verdichtet und verfestigt sich das Material, wobei der Kern des Schaumstoffteils relativ weich bleibt. Es entsteht so eine stabile Sandwich-Struktur mit guten mechanischen und isolierenden Eigenschaften.

Vorteilhafterweise werden die Funktionseinheiten in die Gußform des Schaumstoffteils eingelegt und anschließend wird die Form mit dem jeweiligen Werkstoff gefüllt, wobei zweckmäßigerweise die Formen zur Ausbildung der Befestigungsstellen und Hohlräume zur Aufnahme von Funktionseinheiten oder Einbauteilen ebenfalls vor dem Füllen in die Gußform eingelegt werden.

Neben den Funktionseinheiten können auch Verstärkungsmaterialien an den Außenflächen des Schaumstoffteils angeordnet werden, was zweckmäßigerweise durch Einlegen von Faserstoffen oder Geweben in das Werkzeug und anschließendes Befüllen der Gußform erfolgt.

Zur Reduzierung der Montagekosten kann eine umlaufende Dichtung aus dem Schaumstoffteil ausgeformt oder auf den Rand des Schaumstoffteils aufgespritzt werden.

Anhand von in der Zeichnung dargestellten Ausführungsbeispielen soll der der Erfindung zugrundeliegende Gedanke näher erläutert werden. Es zeigen:
- Fig. 1 -: eine Explosionsdarstellung der Hauptbestandteile einer Kraftfahrzeugtür;
- Fig. 1a -: eine Schnittdarstellung durch eine Kraftfahrzeugtür;
- Fig. 2a und 2b -: Schnittdarstellungen durch ein Trägerelement;
- Fig. 3 -: eine Draufsicht auf das Trägerelement von der Naßraumseite;
- Fig. 4 und 5 -: Draufsichten auf das Trägerelement von der Trockenraumseite;
- Fig. 6 und 7-: Varianten von Führungsschienen;
- Fig. 8 -: eine Einzeldarstellung eines Verbindungsteiles;
- Fig. 9 -: eine Kombination von Führungsschienen und einer Halteplatte für einen Türgriff;
- Fig. 10a und 10b -: eine Schnittdarstellung eines Trägerelements;
- Fig. 11a und 11b-: einen Schnitt durch ein Trägerelement mit Verstärkungselementen sowie
- Fig. 12 -: eine Draufsicht auf ein Trägerelement.

Gleiche Bezugsziffern in unterschiedlichen Figuren bezeichnen gleiche Bauteile.

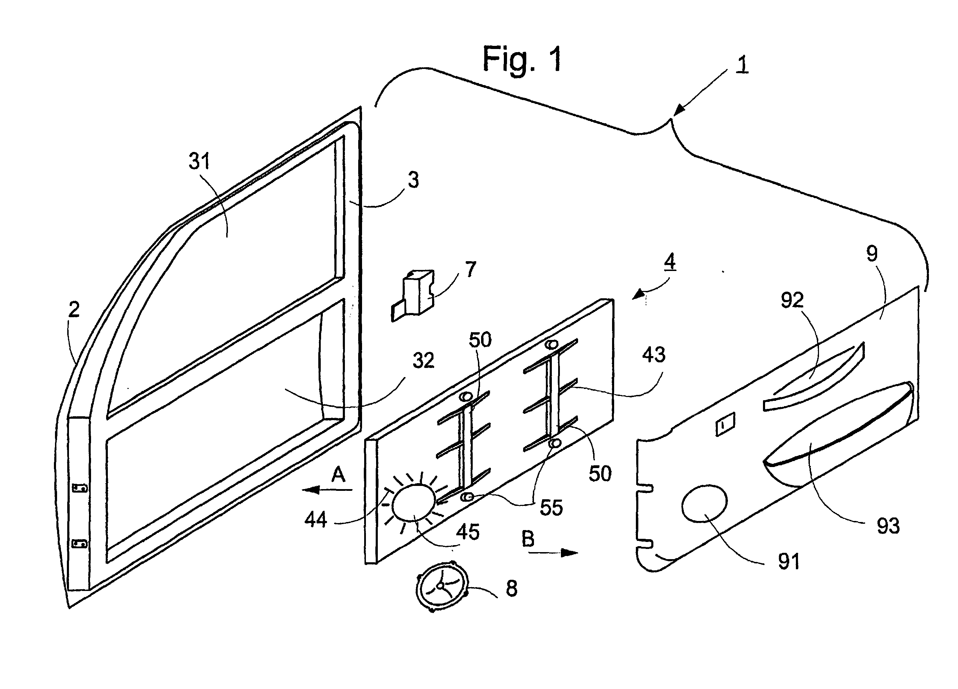

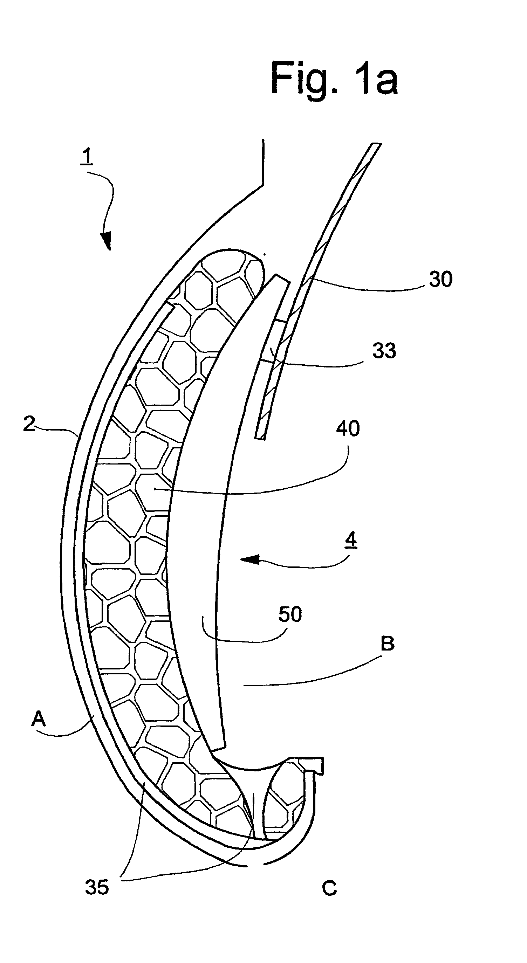

Figur 1 zeigt die Hauptkomponenten einer Kraftfahrzeugtür 1 in Explosionsdarstellung, nämlich ein Türaußenblech 2 mit einem daran befestigten Türrahmen 3. Der Türrahmen 3 weist unterhalb einer Fensteröffnung 31 einen Ausschnitt 32 auf, der durch ein Trägerelement 4, das an dem Türrahmen 3 befestigt wird, verschlossen wird und so den Naßraum A von dem Trockenraum B der Kraftfahrzeugtür 1 trennt. In dem so entstandenen Hohlraum des Türkörpers können Komponenten und elektrische Leitungen untergebracht werden. Die nicht dargestellte Fensterscheibe wird in dieser Ausgestaltung auf der Trockenraumseite B geführt.

In dem Trägerelement 4 ist ein Hohlraum 45 eingearbeitet, der als Aufnahme für einen Lautsprecher 8 ausgebildet ist. Von dem Hohlraum 45 ragen strahlenförmig Versteifungsrippen 44 nach außen, die zur Verstärkung und zur gleichmäßigen und großflächigen Kraftverteilung dienen. Ebenfalls auf dem Trägerelement 4 angebracht sind Führungsschienen 50 und Seilrollen 55, wobei von den Führungsschienen 50 quer zu deren Längserstreckung Versteifungsrippen 43 zur Stabilisierung des Trägerelementes 4 abzweigen. Die Höhe der Versteifungsrippen 43 verringert sich kontinuierlich, ausgehend von einer Maximalhöhe bei der Führungsschiene 50, so daß ein fließender Übergang zu der Oberfläche des Trägerelementes 4 hergestellt wird. Die Führungsschienen 50 können entweder nach der Fertigstellung des Trägerelements 4 angebracht oder bereits während des Fertigungsprozesses in das Werkzeug eingelegt und von dem Schaumwerkstoff umspritzt werden.

Neben den Führungsschienen 50 ist in dem Trägerelement 4 auch ein Schloß 7 integriert. Selbstverständlich können zusätzlich zu den genannten Bauteilen weitere, nicht dargestellte Funktionseinheiten oder Einbauteile innerhalb des Trägerelements 4 oder an dessen Oberfläche angeordnet werden. Die Montage des Trägerelements 4 an dem Türrahmen 3 oder einem Türinnenblech erfolgt je nach Ausgestaltung entweder über Verschrauben der Führungsschienen 50, die somit eine tragende und stabilisierende Funktion übernehmen, oder über gesonderte Schraub- bzw. Befestigungspunkte, die in dem Trägerelement 4 eingearbeitet sind.

Den trockenraumseitigen Abschluß der Kraftfahrzeugtür 1 bildet eine Türinnenverkleidung 9, in der beispielsweise eine Lautsprecheröffnung 91, eine Armlehne 92 und ein Ablagefach 93 integriert sind.

Figur 1a zeigt eine Schnittdarstellung durch eine Fahrzeugtür 1, bei der die Führungsschiene 50 auf der Trockenraumseite B in das Schaumstoffteil 40 eingearbeitet ist. Über einen Mitnehmer 33 ist eine Fensterscheibe 30 mit der Führungsschiene 50 und einem nicht dargestellten Antrieb verbunden und kann in die entsprechende Position verfahren werden. Das Schaumstoffteil 40 bildet hier die Trennwand zwischen Naßraum A und Trockenraum B, wobei eindringende Feuchtigkeit, beispielsweise durch den übertrieben dargestellten Spalt zwischen der Fensterscheibe 30 und dem Türaußenblech 2, an der Naßraumseite A des Schaumstoffteiles 40 abläuft. Zur kontrollierten Ableitung der Feuchtigkeit ist in dem Schaumstoffteil 40 naßraumseitig eine Ablaufrinne 35 eingearbeitet. Ebenso ist auf der Trockenraumseite B eine Ablaufrinne 35 vorgesehen, in der eingedrungene Feuchtigkeit gesammelt und zu einer Öffnung C im Türaußenblech 2 geführt, durch die die Feuchtigkeit in die Umgebung geleitet wird.

Neben dem in der Figur 1a gezeigten Aufbau ist auch die Anordnung der Führungsschiene 50 sowie der Fensterscheibe 30 auf der Naßraumseite A möglich. Dadurch kann das Trägerelement 4 gleichzeitig als Abschluß zum Innenraum dienen. Ebenso ist denkbar, daß eine Armlehne oder Ausbuchtungen für Ablagefächer bereits in dem Trägerelement 4 vorgeformt werden, wodurch die Freiheiten der Innenraumgestaltung erhöht werden.

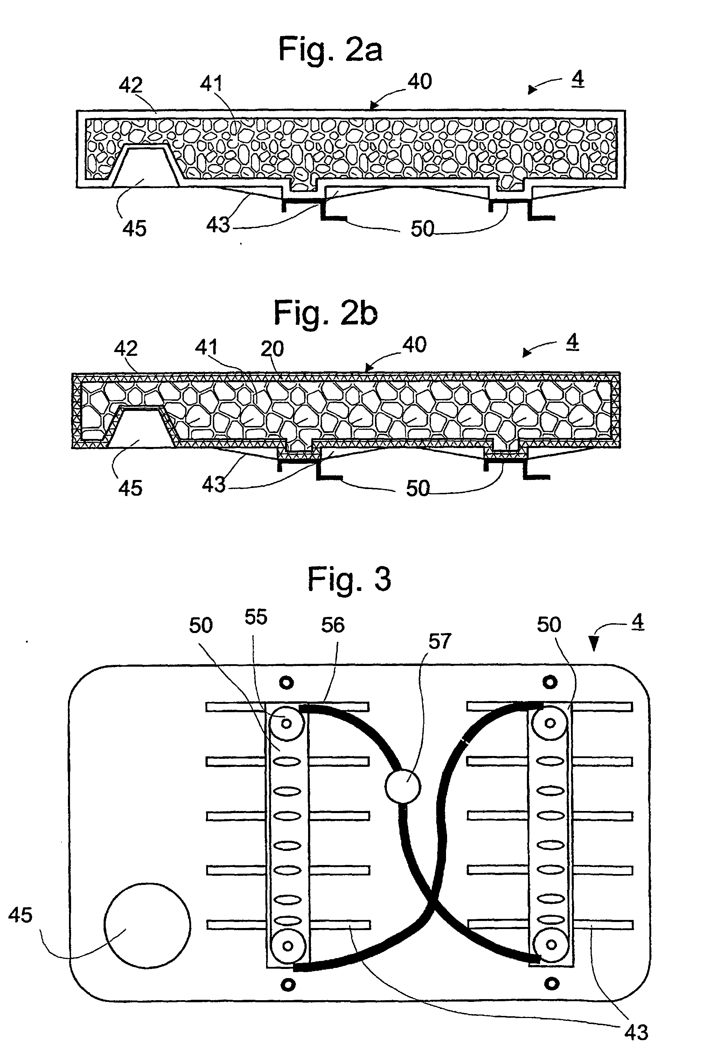

Figur 2a zeigt einen Schnitt durch ein Trägerelement 4 mit einem Schaumstoffteil 40, das aus einem Schaumkern 41 und einer geschlossenen Außenhaut 42 besteht. Der Schaumkern 41 und die Außenhaut 42 bestehen dabei aus einem einzigen Werkstoff und sind in einem Thermoplast-Schaumguß-Verfahren (TSG-Verfahren) hergestellt. Dabei wird dem Kunststoff, z.B. einem Granulat, ein exotherm oder endotherm wirkendes Treibmittel beigemischt, das nach der vollständigen Befüllung der Form expandiert. Auf diese Weise muß die Schwindung des Werkstückes nicht durch den Nachdruck des Werkzeuges ausgeglichen werden, sondern erfolgt durch die chemische Reaktion des Treibmittels. Im Mittenbereich des Werkstückes bildet sich durch das reagierende Treibmittel eine poröse Schaumstruktur, die je nach Prozeßbedingungen unterschiedliche Eigenschaften aufweist.

Durch den Kontakt des Werkstoffes mit der vergleichsweise kühlen Werkzeugwandung und dem von dem Kern des Werkstückes wirkenden Druck des Treibmittels kann das Treibmittel in den Randbereichen nicht expandieren, so daß eine kompakte Außenhaut 42 entsteht, die den Schaumkern 41 umschließt, wobei der Grad der Schaumbildung von der Wandstärke bzw. Schichtdicke des Werkstückes, der Treibmittelart und -menge sowie Prozeßführungsparametern, insbesondere der Kühlung des Werkzeuges und einem eventuellen Nachdruck abhängig ist. Auf diese Weise entsteht ein Bauteil mit Eigenschaften eines ausgeschäumten Hohlprofils, wobei jedoch nur ein Werkstoff und ein Verfahrensschritt notwendig ist.

In dem Schaumstoffteil gemäß Figur 2a ist ein Hohlraum 45 eingearbeitet, der als Lautsprecherkorb zur Aufnahme des nicht dargestellten Lautsprechers 8 dient. Auf der Außenhaut 42 sind die Führungsschienen 50 angebracht, wobei sowohl ein Einschäumen während des Fertigungsprozesses als auch ein nachträgliches Montieren, beispielsweise durch Schrauben, Nieten, Kleben oder Einschnappen möglich ist. Quer zur Längserstreckung der Führungsschienen 50 sind Versteifungsrippen 43 zur Ableitung der auftretenden Kräfte des Fensterhebers auf dem Schaumstoffteil 40 angeordnet, wobei die Versteifungsrippen 43 eine nach außen hin abnehmende Höhe aufweisen und kontinuierlich in die Außenhaut 42 übergehen.

Figur 2b zeigt ein im wesentlichen der Figur 2a entsprechendes Trägerelement 4, bei dem um den Schaumkern 41 herum Verstärkungsmaterial 20 eingebracht ist. Das Verstärkungsmaterial 20 besteht dabei überwiegend aus einem Gewebe, das vor dem Füllen in die Gußform eingelegt wurde. Es ist vorgesehen, daß das Verstärkungsmaterial 20 zu einem Teil aus dem Kunststoffmaterial besteht bzw. von diesem durchsetzt ist, um eine optimale Verbindung mit dem Schaumkern 41 zu erreichen, bzw. um optimal in die Außenhaut 42 eingebettet zu werden.

In Figur 3 ist eine trockenraumseitige Draufsicht des Trägerelements 4 mit dem Hohlraum 45 und einem montierten, doppelsträngigen Bowdenrohrfensterheber dargestellt.

An den Führungsschienen 50 sind Seilrollen 55 angebracht, die ein durch ein Bowdenrohr 56 geführtes Seil, das durch einen Fensterheberantrieb 57 betätigt wird, umlenken. In den Führungsschienen 50 sind Ausnehmungen 51 eingearbeitet, die als Anspritzpunkte bzw. Verbindungsstellen für die Befestigung der Führungsschienen 50 auf bzw. in dem Trägerelement 4 dienen.

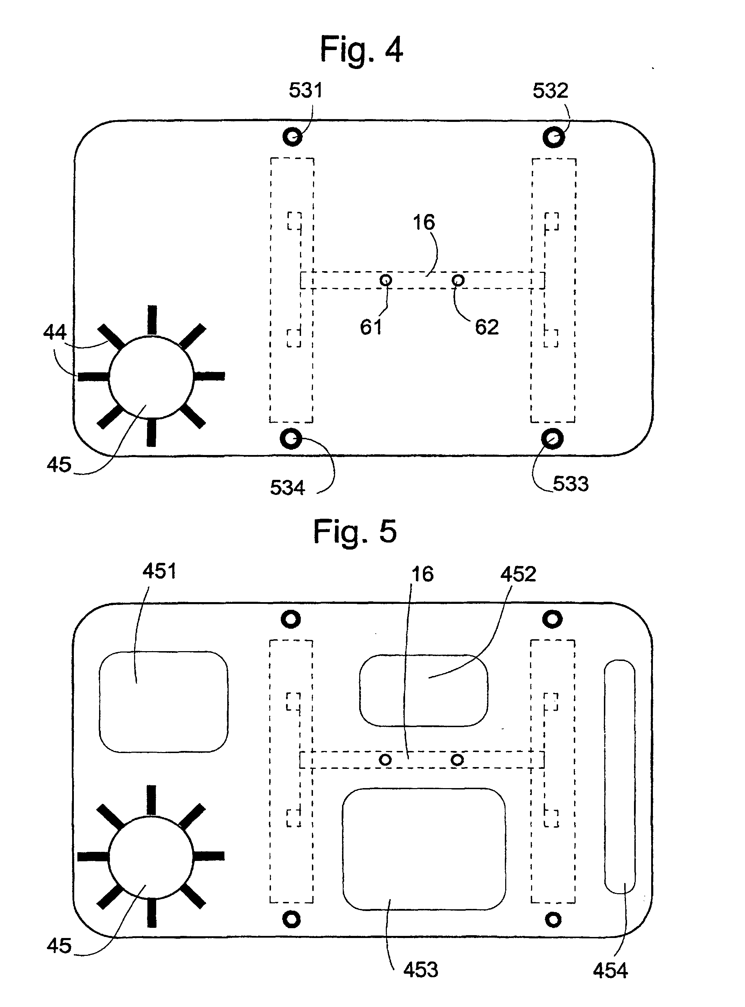

Figur 4 zeigt eine naßraumseitige Draufsicht auf das in der Figur 3 dargestellte Trägerelement 4, in der die innerhalb des Schaumstoffteils liegenden Elemente durch Strichlinien angedeutet sind. Die Führungsschienen 50 sind dabei über eine Halteplatte 16 miteinander fest verbunden und werden entweder zunächst mit der Halteplatte 16 montiert und anschließend umspritzt oder die Halteplatte 16 wird separat eingelegt und umspritzt, wobei die Halteplatte 16 dergestalt zu positionieren ist, daß beim Schließen der Tür die auftretenden Kräfte über die Führungsschienen 50 abgeleitet werden. Insbesondere wenn das Trägerelement über die Führungsschienen 50 mit dem Türrahmen 3 oder dem Türinnenblech verbunden ist, ermöglicht die Verbindung von Führungsschienen 50 und Halteplatte 16 eine Reduzierung der Wandstärke des Trägerelements 4, da nur geringe Kräfte über das Schaumstoffteil 40 abgeleitet werden müssen.

In Figur 4 sind jeweils an den Enden der Führungsschienen 50 Befestigungspunkte 531 bis 534 angebracht, über die das Trägerelement 4 mit dem Türrahmen 3 oder dem Türinnenblech verbunden wird. Nicht dargestellt sind weitere Befestigungspunkte, die am äußeren Umfang des Trägerelements 4 angeordnet sind und eine gleichmäßige Anlage an dem Türrahmen 3 bewirken. Die Halteplatte 16 weist ebenfalls Befestigungspunkte 61 und 62 auf, an denen ein Türgriff befestigbar ist.

Das Trägerelement 4 in der Figur 5 unterscheidet sich von dem in der Figur 4 dargestellten dadurch, daß Bereiche 451 bis 454 mit reduzierter Wandstärke vorgesehen sind. Dadurch kann Material an weniger belasteten Bereichen eingespart werden, wodurch sich die Kosten und das Gewicht des Trägerelements 4 verringern.

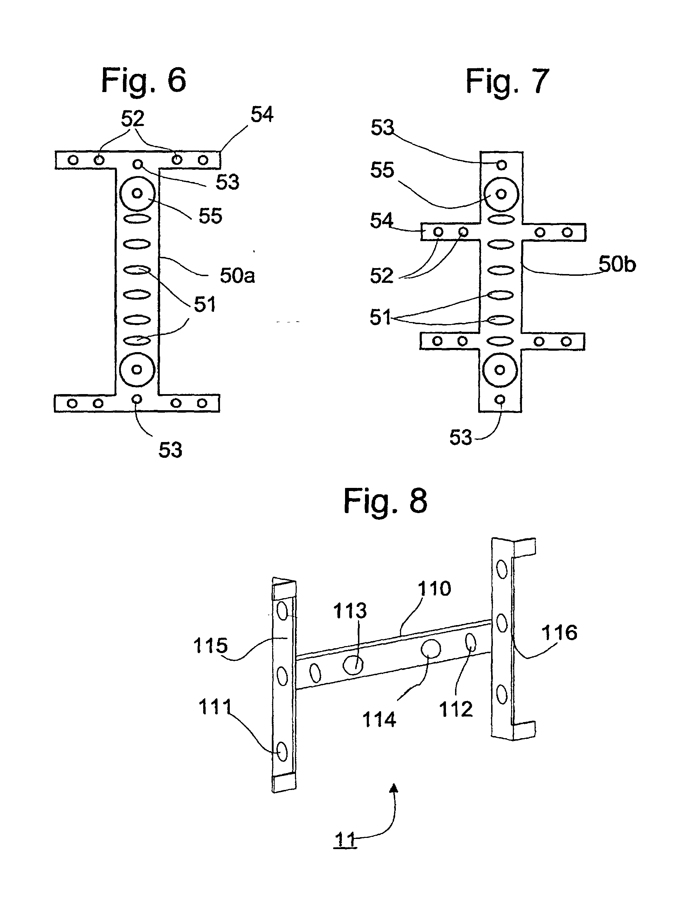

Die Figuren 6 und 7 zeigen Varianten von Führungsschienen 50a und 50b, die abhängig von den Abmessungen des Trägerelements 4 und der Schienenlänge eingesetzt werden. Ist die vertikale Abmessung des Trägerelements 4 gleich der Schienenlänge, wird die Führungsschiene 50a der Figur 6 eingesetzt. Neben den bereits beschriebenen Ausnehmungen 51 und der Seilrolle 55 sind ober- bzw. unterhalb der Seilrollen 55 Befestigungspunkte 53 angebracht, die beispielsweise als Schraubpunkte ausgebildet sind. Quer zur Längserstreckung der Führungsschiene 50a sind auf Höhe der Befestigungspunkte 53 Querstreben 54 an der Führungsschiene 50a angeformt oder befestigt, um beim Einspritzen der Führungsschiene 50a in das nicht dargestellte Schaumstoffteil 40 einen besseren Halt zu gewährleisten. In diesen Querstreben 54 sind ebenfalls Ausnehmungen 52 angebracht, die als Anspritzpunkte bzw. Verbindungsstellen dienen und die Führungsschiene 50a in dem Schaumstoffteil 40 verankern.

Die Führungsschiene 50b in der Figur 7 unterscheidet sich von der Führungsschiene 50a dadurch, daß die Querstreben 54 zwischen den Seilrollen 55 angeordnet sind. Diese Anordnung ist erforderlich, sobald die Abmessung des Trägerelements 4 kleiner als die der Schienenlänge ist, die Führungsschiene 50b also über das Schaumstoffteil 40 hinausragt. Die Befestigungspunkte 53 sind auch hier ober- bzw. unterhalb der Seilrollen 55 angeordnet. In beiden Fällen wird das Trägerelement 4 über Befestigungspunkte 53 der Führungsschienen 50a, 50b an dem Türrahmen 3 oder dem Türinnenblech befestigt.

Wie in den Figuren 4 und 5 gezeigt, können die Führungsschienen 50 über ein Verbindungsteil, daß hier als Halteplatte 16 für den Türgriff ausgebildet ist, miteinander verbunden werden. In Figur 8 ist ein solches, H-förmig gestaltetes Verbindungsteil 11 dargestellt. Zwischen zwei Längsstreben 115 und 116 ist eine Querstrebe 110 angeordnet, in der sowohl Befestigungspunkte 113 und 114 als auch Ausnehmungen 112 eingearbeitet sind. Die Ausnehmungen 112 dienen wiederum als Verbindungsstellen bzw. Anspritzpunkte, um eine stabile Verbindung zu dem Schaumstoffteil 40 herstellen zu können.

Senkrecht zu der Querstrebe 110 sind die Längsstreben 115 und 116 ausgerichtet, die hier rechtwinkelig aus der Ebene der Querstrebe 110 herausgebogen sind. Auch in die Längsstreben 115 und 116 sind Ausnehmungen 111 als Verbindungsstellen eingearbeitet und an den oberen und unteren Enden der Längsstreben befinden sich jeweils ein rechtwinkelig in die Ebene der Querstrebe 110 abgeknickte Lasche, auf die eine Führungsschiene 50 vor dem Einspritzen in das Schaumstoffteil 40 gelegt werden kann. Über diese Lasche können Kräfte, die von der Querstrebe 110 aufgenommen werden, beispielsweise über einen an Befestigungspunkten 113 und 114 angebrachten Türgriff, auf die Führungsschienen 50 abgeleitet werden. Alternativ zu der Lasche kann auch eine taschenartige Ausbildung vorgesehen werden, so daß Kräfte in zwei Richtungen, also beim Öffnen und Schließen der Kraftfahrzeugtür 1 übertragen werden können.

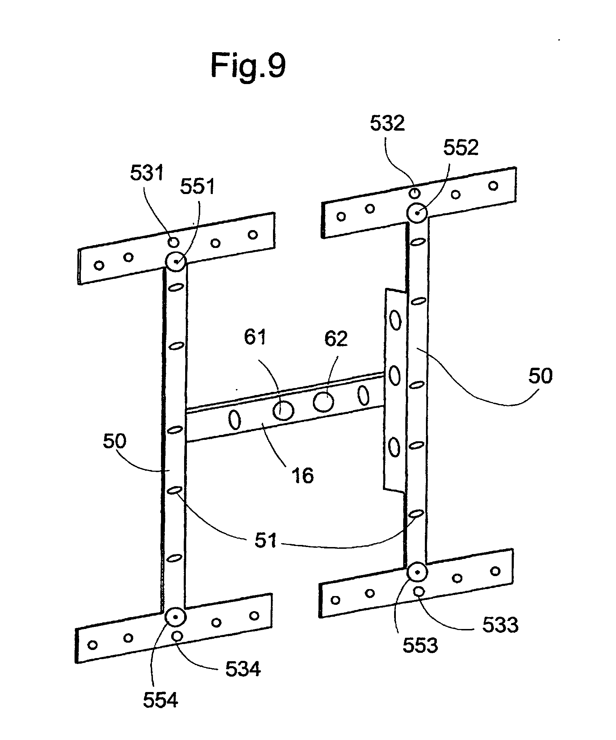

In Figur 9 ist eine einstückige Ausbildung der Führungsschiene 50 und der Halteplatte 16 dargestellt, wobei die Führungsschienen 50 in dieser Variante gemäß Figur 6 ausgebildet sind und die Elemente wie Seilrollen 551 bis 554, Ausnehmungen 51 und Befestigungspunkte 531 bis 534 entsprechend aufweist. Durch die einstückige Ausbildung werden die auf das Trägerelement 4 aufgebrachten, bzw. über die Halteplatte 16 oder die Führungsschienen 50 eingeleiteten Kräfte gleichmäßig und großflächig verteilt bzw. auf den Türrahmen 3 übertragen. Ebenso werden die in beiden Richtungen im wesentlichen senkrecht zur Fläche des Trägerelements 4 ausgeübten Kräfte wirksam abgestützt. Darüber hinaus verringert sich der Montageaufwand, da lediglich ein Teil in das Spritzgußwerkzeug eingelegt werden muß. Bei dieser Ausgestaltungsform von Führungsschiene 50 und Halteplatte 16 bietet sich ein Ausstanzen und anschließendes Biegen an, wobei, wie auch bei den vorbeschriebenen Funktionseinheiten, ebenfalls eine mehrteilige, zusammengesetzte Ausführung möglich ist.

Neben den anhand der Figuren beschriebenen Funktionseinheiten Führungsschiene 50 und Halteplatte 16 können selbstverständlich auch das Schloß 7, Gewindehülsen oder andere Aufnahmeeinrichtungen, beispielsweise für den Fensterheberantrieb 57, in das Schaumstoffteil 40 integriert werden. Dies erfolgt entweder durch das Einlegen der Funktionseinheiten in die Spritzgußform und dem anschließenden Umspritzen oder durch nachträgliches Montieren, beispielsweise durch Einsenken mittels Wärme oder Ultraschalls.

Um Einbauteile wie Türlampen, Lautsprecher 8, das Schloß 7 oder dergleichen in dem Schaumstoffteil 40 zu positionieren, sind die entsprechenden Hohlräume sehr leicht durch Einlegen der korrespondierenden Formen in die Gußform herzustellen und die Einbauteile können an den jeweiligen Stellen eingesetzt werden.

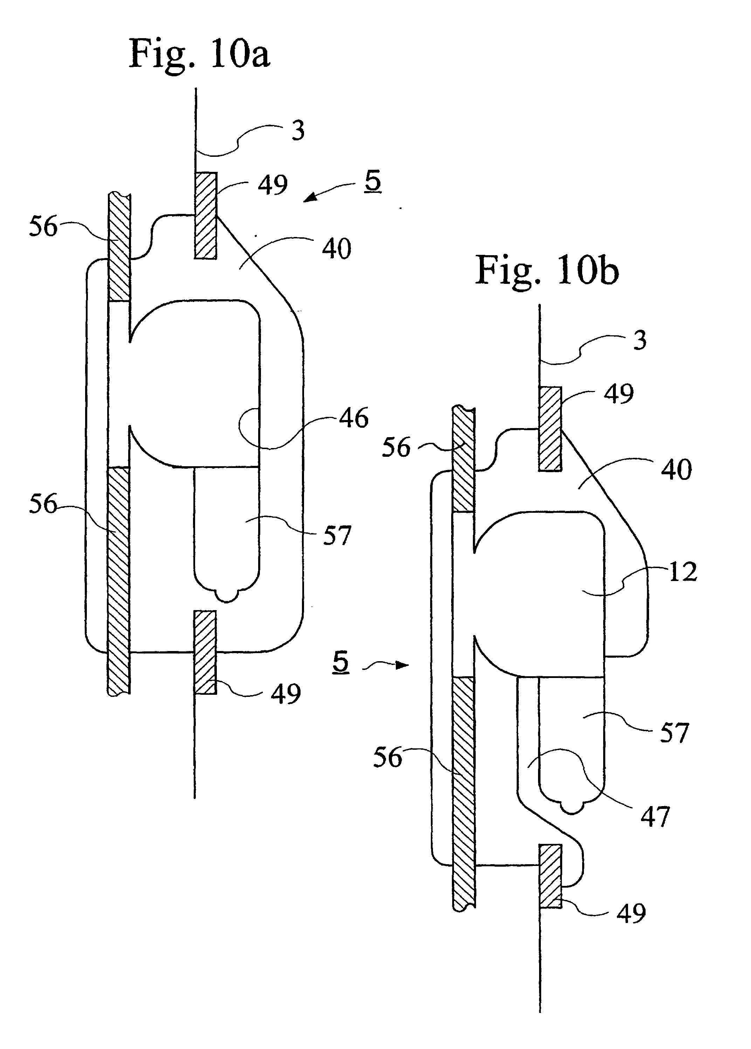

Figur 10a zeigt einen Schnitt durch ein Trägerelement 5, bei dem ein Fensterheberantrieb 57 zusammen mit dem Getriebe 12 vollständig von dem Schaumstoffteil 40 umschlossen ist und so in dem Trägerelement 5 festgelegt wurde. In dem Schaumstoffteil 40 ist dabei ein Hohlraum 46 vorgesehen, in den das Getriebe 12 und der Antrieb 57 eingelegt werden kann. Ebenso ist ein Umspritzen des Antriebes 57 und des Getriebes 12 vorgesehen. Aus thermischen Gründen kann das Schaumstoffteil 40 auch Ausnehmungen in Form von Schlitzen oder Löchern aufweisen, durch die ein Wärmeaustausch zwischen dem Fensterheberantrieb 57 und der Umgebung stattfindet.

Ebenfalls in das Schaumstoffteil 40 sind Kunststoffplatten 49 integriert, über die das Trägerelement 5 an dem Türrahmen 3 bzw. an dem Türinnenblech angebracht werden können. Die Kunststoffplatten 49 erleichtern durch ihre glattflächige und feste Struktur eine Montage des Trägerelements 5 an dem Türrahmen 3 und dienen gleichzeitig als eine Verstärkung des Trägerelements 5. Die Kunststoffplatten 49 sowie der Antrieb 57 und das Getriebe 12 sind zweckmäßigerweise während der Herstellung des Trägerelementes 5 eingeschäumt bzw. umschäumt worden; es ist jedoch auch ein nachträgliches Einsetzen möglich, indem die Kunststoffplatten 49 beispielsweise eingesenkt und der Antrieb 57 mit Getriebe 12 in den vorbereiteten Hohlraum 46 eingesetzt werden.

In dem Schaumstoffteil 40 des Trägerelementes 5 sind ebenfalls Aufnahmen für Bowdenrohre 56 vorgesehen, wobei die Bowdenrohre 56 an dem Getriebe 12 anschließen und das nicht dargestellte Seil eines Seilzugfensterhebers führen.

Figur 10b zeigt eine Schnittdarstellung eines Trägerelementes 5, das im wesentlichen mit dem der Figur 10a übereinstimmt. Der Unterschied liegt in der Aussparung 47, in der der Fensterheberantrieb 57 angeordnet ist. Der Antrieb 57, in der Regel ein Elektromotor, ist somit nicht von dem Schaumstoffteil 40 umschlossen und ist frei zugänglich mit dem Trägerelement 5 über das Getriebe 12 verbunden. Dies hat den Vorteil eines leichteren Zuganges zu dem Antrieb 57, sollte dieser ausgetauscht oder repariert werden.

Ebenso ist eine solche Ausgestaltung thermisch günstig, da der Wärme entwickelnde Antrieb 57 allseitig zugänglich ist und die Wärme über die Umgebungsluft ungehindert abgeführt werden kann.

Durch das Einschäumen des Antriebes 57 und des Getriebes 12 findet zudem eine akustische Entkopplung von schwingungsfähigen Bauteilen wie dem Türinnenblech bzw. dem Türrahmen 3 sowie eine Dämpfung statt, wodurch das Geräuschniveau der gesamten Fensterhebermechanik gesenkt wird.

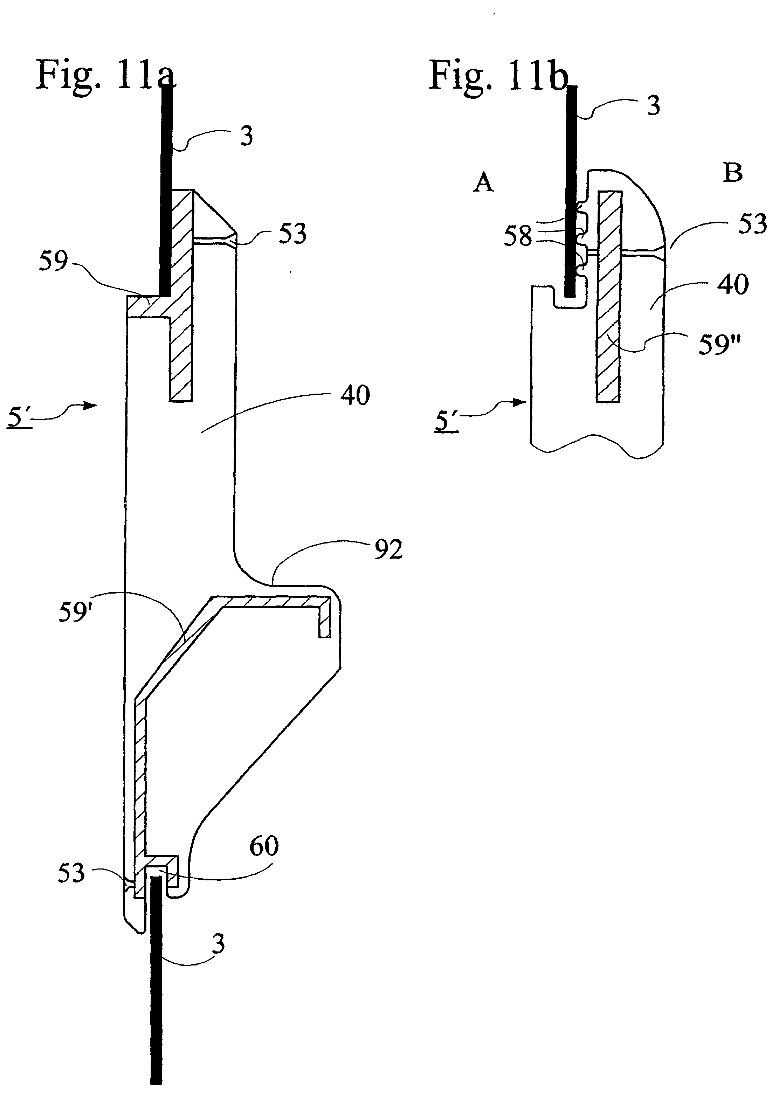

In der Figur 11a ist eine weitere Ausgestaltung eines Trägerelements 5' in Schnittdarstellung gezeigt, bei der innerhalb des Schaumstoffteiles 40 Verstärkungselemente 59, 59' angeordnet sind, die zum einen der leichteren Befestigung des Trägerelementes 5' an dem Türrahmen 3 dienen, zum anderen das Schaumstoffteil 40 in dem Bereich der ausgeformten Armlehne 92 unterstützen. In dem der Armlehne 92 zugeordneten Verstärkungselement 59' ist eine Nut 60 eingearbeitet, die den entsprechenden Abschnitt des Türrahmens 3 aufnimmt und so eine erste Festlegung des Trägerelements 5' erreicht. Das obere Verstärkungselement 59 durchragt die Öffnung in dem Türrahmen 3 teilweise und bildet einen Anschlag, an dem das Trägerelement 5' in seiner Position innerhalb des Türrahmens 3 ausgerichtet werden kann.

Zusätzlich zu der Nut 60 sind in dem Trägerelement 5' an dessen oberen und unteren Enden Befestigungspunkte 53 vorgesehen, über die das Trägerelement 5' mittels Befestigungselementen, beispielsweise über Schrauben oder Clipsverbinder, an dem Türrahmen 3 angebracht werden kann. Die Verstärkungselemente 59, 59' können aus Kunststoff, Metall oder einem Preßmaterial bestehen und sind entweder mit entsprechenden Bohrungen versehen oder werden bei der Montage von dem Befestigungsmittel, z.B. einer Blechschraube, durchdrungen.

Figur 11b zeigt eine Detailansicht eines Trägerelementes 5' mit einem flächigen Verstärkungselement 59'', wobei an der dem Türrahmen 3 zugewandten Seite des Schaumstoffteiles 40 drei Dichtrippen 58 ausgebildet sind, die eine Trennung von Naßraum (A) und Trockenraum (B) bewirken. Auch in dieser Ausgestaltungsform der Erfindung sind Befestigungspunkte 53 vorgesehen, über die eine Festlegung auf dem Türrahmen 3 erfolgt. Das Verstärkungselement 59'' dient unter anderem dazu, die durch das nicht dargestellte Befestigungsmittel aufgebrachte Kraft auf eine große Fläche zu verteilen, so daß das Schaumstoffteil 40 nicht an einer Stelle große Kräfte aufnehmen muß. Darüber hinaus wird ein gleichmäßiges Anliegen der Dichtrippen gewährleistet.

Die Verstärkungselemente 49, 59, 59' und 59'' können ebenfalls zumindest teilweise als elektrische Leiter ausgebildet sein, so daß Schaltungen oder Kabelbäume in das Schaumstoffteil 40 integriert werden können.

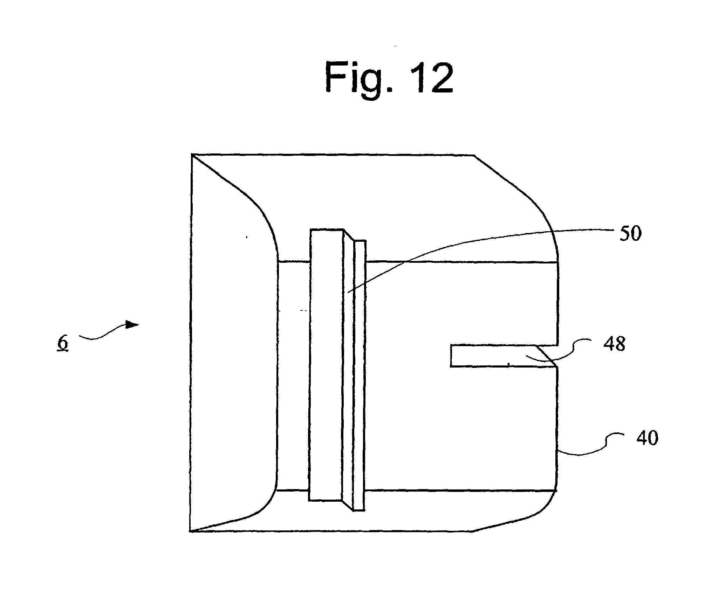

Figur 12 zeigt eine Draufsicht auf ein Trägerelement 6, auf dem eine Führungsschiene 50 eines Fensterhebers angebracht ist. Das Schaumstoffteil 40 ist dabei mit einer Ausnehmung versehen, die als Führungsabschnitt 48 eines Türschlosses dient.

Bezugszeichenliste
- 1 -: Kraftfahrzeugtür
- 2 -: Türaußenblech
- 3 -: Türrahmen
- 30 -: Fensterscheibe
- 31 -: Fensteröffnung
- 32 -: Ausschnitt
- 33 -: Mitnehmer
- 35 -: Ablaufrinne
- 4 -: Trägerelement
- 40 -: Schaumstoffteil
- 41 -: Schaumkern
- 42 -: Außenhaut
- 43 und 44 -: Versteifungsrippen
- 45 -: Hohlraum
- 451 bis 454 -: Bereiche reduzierter Wanddicke
- 46 -: Hohlraum
- 47 -: Aussparung
- 49 -: Kunststoffplatte
- 5, 5' -: Trägerelement
- 50, 50a und 50b -: Führungsschienen
- 51 und 52 -: Ausnehmungen
- 53 -: Befestigungspunkt
- 531 bis 534 -: Befestigungspunkte
- 54 -: Querstrebe
- 55 -: Seilrolle
- 551 bis 554 -: Seilrollen
- 56 -: Bowdenrohr
- 57 -: Fensterheberantrieb
- 58 -: Dichtrippen
- 59, 59', 59'' -: Verstärkungselemente
- 6 -: Trägerelement
- 60 -: Nut
- 61 und 62 -: Befestigungspunkte
- 7 -: Schloß
- 8 -: Lautsprecher
- 9 -: Türinnenverkleidung
- 91 -: Lautsprecheröffnung
- 92 -: Armlehne
- 93 -: Ablagefach
- 11 -: Verbindungsteil
- 111 und 112 -: Ausnehmungen
- 113 und 114 -: Befestigungspunkte
- 115 und 116-: Längsstreben
- 12 -: Getriebe
- 16 -: Halteplatte
- 20 -: Verstärkungsmaterial
- A -: Naßraumseite
- B -: Trockenraumseite
- C -: Öffnung

## Patentansprüche

1. Trägerelement, ausgebildet zur Aufnahme von Funktionseinheiten einer Kraftfahrzeugtür (1) das mit einem tragenden Teil (3) der Kraftfahrzeugtür verbindbar ist und bei dem zumindest ein Teil (40) des Trägerelementes (4, 5, 5', 6) aus einem Schaumstoff besteht, der einen Schaumkern (41) und eine Außenhaut (42) aufweist, **dadurch gekennzeichnet, daß** die Außenhaut (42) und der Schaumkern (41) einstükkig ausgebildet sind und die Außenhaut (42) eine höhere Festigkeit als der von der Außenhaut (42) umfaßte Schaumkern (41) aufweist.

2. Trägerelement nach Anspruch 1, **dadurch gekennzeichnet, daß** die Außenhaut (42) den Schaumkern (41) vollständig umschließt.

3. Trägerelement nach Anspruch 1 oder 2, **dadurch gekennzeichnet, daß** der aus Schaumstoff bestehende Teil (40) des Trägerelements (4, 5, 5', 6) zur Aufnahme mindestens einer Funktionseinheit (7, 8, 11, 12, 16, 50, 50a, 50b, 55, 56, 57) der Kraftfahrzeugtür (1) vorgesehen ist.

4. Trägerelement nach einem der voranstehenden Ansprüche, **dadurch gekennzeichnet, daß** der Schaumstoff als Hartschaumstoff ausgebildet ist und daß als Schaumstoff ein Schaumkunststoff verwendet wird.

5. Trägerelement nach einem der Ansprüche 1 bis 4, **dadurch gekennzeichnet, daß** der Schaumstoff aus einem expandierenden Polypropylen (EPP) oder einem expandierenden Polyethylen (EPE) besteht.

6. Trägerelement nach einem der voranstehenden Ansprüche, **dadurch gekennzeichnet, daß** das Schaumstoffteil aus einem derart geschäumten Kunststoff besteht, daß dessen Hohlräume, ausgehend von einem Mittenbereich des Schaumstoffteils (40), in Richtung einer geschlossenen Außenhaut (42) ein konstantes oder ein sich verringerndes Volumen aufweisen.

7. Trägerelement nach Anspruch 6, **dadurch gekennzeichnet, daß** die Dicke der geschlossenen Außenhaut (42) durch die Wahl des Verhältnisses zwischen dem verwendeten Kunststoff und dem Treibmittel und/oder der Temperaturführung der Kunststoffschmelze oder des Werkzeuges wählbar ist.

8. Trägerelement nach Anspruch 6 oder 7, **dadurch gekennzeichnet, daß** das Schaumstoffteil (40) aus einem Kunststoff-Sandwich-Körper mit einem Schaumkern (41) geringer Dichte und einer vollflächigen, kompakten Außenhaut (42) besteht.

9. Trägerelement nach einem der voranstehenden Ansprüche, **dadurch gekennzeichnet, daß** die Funktionseinheiten (7, 8, 11, 12, 16, 50, 50a, 50b, 55, 56, 57) von dem Schaumstoffteil (40) ganz oder teilweise umspritzt sind.

10. Trägerelement nach Anspruch 9, **dadurch gekennzeichnet, daß** in dem Schaumstoffteil (40) Verbindungsteile (11, 16) für die Funktionseinheiten (50, 50a, 50b) einstükkig integriert sind.

11. Trägerelement nach Anspruch 9 oder 10, **dadurch gekennzeichnet, daß** das Trägerelement (4, 5, 5', 6) zur Aufnahme zumindest von Teilen (12, 50, 50a, 50b, 55, 56, 57) eines Fensterhebers vorgesehen ist.

12. Trägerelement nach einem der Ansprüche 9 bis 11, **dadurch gekennzeichnet, daß** in das Schaumstoffteil (40) eine Führungsschiene (50, 50a, 50b) für einen Fensterheber eingeschäumt ist.

13. Trägerelement nach Anspruch 11 oder 12, **dadurch gekennzeichnet, daß** der die Stützflächen für die Mitnehmer (33) eines Fensterhebers aufweisende Führungsbereich einer Führungsschiene (50, 50a, 50b) über die Außenhaut (42) des Schaumstoffteils (40) hinausragt.

14. Trägerelement nach einem der voranstehenden Ansprüche, **dadurch gekennzeichnet, daß** in dem Schaumstoffteil (40) mindestens ein Befestigungsmittel eingeschäumt ist, das zur Herstellung einer Verbindung zwischen dem Trägerelement (4, 5, 5', 6) und einem weiteren Bauteil (3) über einen Befestigungspunkt (53) dient.

15. Trägerelement nach Anspruch 14, **dadurch gekennzeichnet, daß** das Befestigungsmittel einen Befestigungspunkt (53) aufweist, der außerhalb der Kontur des Schaumstoffteils (40) angeordnet ist.

16. Trägerelement nach Anspruch 14 oder 15, **dadurch gekennzeichnet, daß** der Befestigungspunkt (53) an einer Führungsschiene (50, 50a, 50b) ausgebildet ist.

17. Trägerelement nach einem der voranstehenden Ansprüche, **dadurch gekennzeichnet, daß** in dem Schaumstoffteil (40) mindestens eine Aussparung (45, 46, 47, 48) zur Aufnahme oder Ausbildung mindestens einer Funktionseinheit (7, 8, 12, 56, 57) der Kraftfahrzeugtür (1) vorgesehen ist.

18. Trägerelement nach Anspruch 17, **dadurch gekennzeichnet, daß** die mindestens eine, Aussparung durch einen Hohlraum (45, 46) gebildet wird.

19. Trägerelement nach Anspruch 17 oder 18, **dadurch gekennzeichnet, daß** die mindestens eine Aussparung (46, 47) zur Aufnahme eines Antriebsmotors (57) und/oder einer mit dem Antriebsmotor gekoppelten Getriebeeinheit (12) ausgebildet ist.

20. Trägerelement nach Anspruch 17, **dadurch gekennzeichnet, daß** in dem Schaumstoffteil (40) ein Führungsabschnitt (48) ausgeformt ist, der zur Aufnahme eines Türschlosses (7) dient.

21. Trägerelement nach mindestens einem der Ansprüche 18 bis 20, **dadurch gekennzeichnet, daß** von den Funktion-seinheiten (7, 8, 12, 50, 50a, 50b, 55, 56, 57) oder den Aussparungen bildenden Hohlräumen (45, 46) für Funktionseinheiten (7, 8, 12, 50, 50a, 50b, 56, 57) Versteifungsrippen (43, 44) abzweigen.

22. Trägerelement nach Anspruch 21, **dadurch gekennzeichnet, daß** die Versteifungsrippen (43, 44) senkrecht zur Längserstreckung der Funktionseinheiten (8, 50, 50a, 50b), der Hohlräume (45, 46) oder von Verbindungsteilen (11) oder Halteplatten (16) angeordnet sind oder strahlenförmig davon ausgehen.

23. Trägerelement nach einem der Ansprüche 1 bis 18, **dadurch gekennzeichnet, daß** ein Hohlraum in dem Schaumstoffteil (40) als Luftführung oder als Resonanzraum für einen Lautsprecher (8) dient.

24. Trägerelement nach mindestens einem der voranstehenden Ansprüche, **dadurch gekennzeichnet, daß** die Funktionseinheiten (11, 16, 50, 50a, 50b), auf die im wesentlichen senkrecht zur Fläche des Trägerelements (4, 5, 5', 6) Kräfte ausgeübt werden, von anderen Funktionseinheiten (11, 16, 50, 50a, 50b) abgestützt sind.

25. Trägerelement nach einem der voranstehenden Ansprüche, **dadurch gekennzeichnet, daß** Schnappverbindungen, Führungskanäle und/oder Montagehilfen zur Aufnahme oder Montage von Funktionseinheiten (7, 8, 12, 50, 50a, 50b, 56, 57) oder Kabeln in das Schaumstoffteil (40) integriert sind.

26. Trägerelement nach einem der voranstehenden Ansprüche, **dadurch gekennzeichnet, daß** in dem Schaumstoffteil (40) eine Wasserablaufrinne (35) integriert ist.

27. Trägerelement nach einem der voranstehenden Ansprüche, **dadurch gekennzeichnet, daß** an das Trägerelement (5) mindestens ein Dichtungsabschnitt (58) angeformt ist, der zur Abdichtung der Verbindung zwischen dem Trägerelement (4, 5, 5', 6) und dem tragenden Teil (3) der Kraftfahrzeugtür (1) dient.

28. Trägerelement nach Anspruch 27, **dadurch gekennzeichnet, daß** der Dichtungsabschnitt (58) durch einen hinreichend deformierbaren Bereich des Schaumstoffteils (40) gebildet wird.

29. Trägerelement nach einem der voranstehenden Ansprüche, **dadurch gekennzeichnet, daß** im Schaumstoff mindestens ein elektrischer Leiter integriert ist, der zur Leitung elektrischen Stroms im Bereich der Kraftfahrzeugtür (1) dient.

30. Trägerelement nach einem der voranstehenden Ansprüche, **dadurch gekennzeichnet, daß** in dem Schaumstoffteil (40) mindestens ein Verstärkungselement (49, 59, 59', 59'') integriert ist, das zur Stabilisierung des Trägerelements (4, 5, 5', 6) dient.

31. Trägerelement nach Anspruch 30, **dadurch gekennzeichnet, daß** das Verstärkungselement (49, 59, 59', 59'') aus Kunststoff oder Metall besteht.

32. Trägerelement nach Anspruch 30 oder 31, **dadurch gekennzeichnet, daß** das Verstärkungselement (49, 59, 59', 59'') zur Leitung elektrischen Stroms dient.

33. Trägerelement nach einem der voranstehenden Ansprüche, **dadurch gekennzeichnet, daß** um das Schaumstoffteil (40) Verstärkungsmaterial (20) angeordnet ist.

34. Trägerelement nach Anspruch 33, **dadurch gekennzeichnet, daß** das Verstärkungsmaterial (20) aus Faserstoffen wie Matten oder Geweben besteht.

35. Trägerelement nach Anspruch 33 oder 34, **dadurch gekennzeichnet, daß** das Verstärkungsmaterial (20) überwiegend aus nachwachsenden Rohstoffen wie Hanf oder aus synthetischen Werkstoffen wie Glas- oder Kohlefaser besteht.

36. Trägerelement nach einem der Ansprüche 33 bis 35, **dadurch gekennzeichnet, daß** das Verstärkungsmaterial (20) von dem Werkstoff des Schaumstoffteils (40) durchsetzt ist.

37. Trägerelement nach einem der Ansprüche 33 bis 36, **dadurch gekennzeichnet, daß** das Verstärkungsmaterial (20) an mechanisch belasteten Stellen des Trägerelements (4, 5, 5', 6) angeordnet ist.

38. Trägerelement nach einem der voranstehenden Ansprüche, **dadurch gekennzeichnet, daß** das Schaumstoffteil (40) Bereiche aufweist, die als Seitenaufprallschutz zur Aufnahme von Energie im Crash-Fall dienen.

39. Trägerelement nach einem der voranstehenden Ansprüche, **dadurch gekennzeichnet, daß** das Trägerelement (4, 5, 5', 6) zwischen dem Naßraum (A) und dem Trockenraum (B) des Fahrzeugs angeordnet ist.

40. Trägerelement nach Anspruch 39, **dadurch gekennzeichnet, daß** das Trägerelement (4, 5, 5', 6) den Naßraum (A) vom Trockenraum (B) des Fahrzeugs trennt.

41. Trägerelement nach Anspruch 39 oder 40, **dadurch gekennzeichnet, daß** das Schaumstoffteil (40) zum Naßraum (A) oder Trockenraum (B) des Fahrzeugs hin mit einem wasserdichten Material versehen ist.

42. Trägerelement nach einem der voranstehenden Ansprüche, **dadurch gekennzeichnet, daß** das Schaumstoffteil (40) Bereiche (451, 452, 453, 454) mit unterschiedlicher Wanddicke aufweist.

43. Trägerelement nach einem der voranstehenden Ansprüche, **dadurch gekennzeichnet, daß** das Trägerelement (4, 5, 5', 6) als Trägerplatte eines Türmoduls ausgebildet ist, das komplett montiert an der Kraftfahrzeugtür (1) befestigbar ist.

44. Kraftfahrzeugtür mit einem Trägerelement gemäß einem der voranstehenden Ansprüche.

45. Verfahren zum Herstellen eines Trägerelements aus Kunststoff zur Aufnahme von Funktionseinheiten oder Einbauteilen eines Kraftfahrzeuges, insbesondere einer Kraftfahrzeugtür, wobei zumindest ein Teil des Trägerelements als Schaumstoffteil (10), ausgebildet ist,
**dadurch gekennzeichnet,**
**daß** das Schaumstoffteil (40) mit einem Schaumkern (41) geringer Dichte und einer einstückig daran ausgebildeten kompakten Außenhaut (42) im Thermoplast-Schaumguß-Verfahren (TSG) unter Verwendung eines Kunststoffs mit einem endotherm oder exotherm reagierenden Treibmittelzusatz hergestellt wird.

46. Verfahren nach Anspruch 45, **dadurch gekennzeichnet, daß** durch die Wahl des Treibmittelzusatzes und/oder durch die Steuerung des Abkühlungsprozesses die Hohlräume des Schaumkerns (41) ausgehend von einem Mittenbereich des Schaumstoffteils (40) in Richtung der kompakten Außenhaut (42) gleichbleibend sind oder ein sich stetig verringerndes Volumen aufweisen.

47. Verfahren nach Anspruch 45 oder 46, **dadurch gekennzeichnet, daß** die Dichte der Schaumstruktur durch Zusammenfahren einer Gußform erhöht und durch Auseinanderfahren der Gußform verringert wird.

48. Verfahren zur Herstellung eines Trägerelements aus Kunststoff zur Aufnahme von Funktionseinheiten oder Einbauteilen eines Kraftfahrzeugs, insbesondere einer Kraftfahrzeugtür, wobei zumindest ein Teil des Trägerelements als Schaumstoffteil ausgebildet ist,
**dadurch gekennzeichnet,**
**dass** das Schaumstoffteil (40) mit einem Schaumkern (41) geringerer Dichte und einer einstückig daran ausgebildeten kompakten Außenhaut (42) unter Verwendung eines expandierenden Polyprophylen oder eines expandierenden Polyethylen hergestellt wird, wobei die Oberflächen des Schaumstoffteils (40) angeschmolzen werden.

49. Verfahren nach Anspruch 48, **dadurch gekennzeichnet, daß** nach dem Befüllen einer Gußform die Oberflächen des Schaumstoffteils (40) angeschmolzen werden.

50. Verfahren nach Anspruch 49, **dadurch gekennzeichnet, daß** das Anschmelzen durch Erwärmen der Gußform erfolgt.

51. Verfahren nach einem der Ansprüche 45 bis 50, **dadurch gekennzeichnet, daß** die Funktionseinheiten in die Gußform des Schaumstoffteils (40) eingelegt werden und anschließend die Form gefüllt wird.

52. Verfahren nach einem der Ansprüche 45 bis 50, **dadurch gekennzeichnet, daß** Verstärkungsmaterialien (20) in die Gußform des Schaumstoffteils (40) eingelegt werden, die nach dem Füllen der Form an Außenflächen des Schaumstoffteils angeordnet sind.

53. Verfahren nach Anspruch 52, **dadurch gekennzeichnet, daß** als Verstärkungsmaterialien Faserstoffe oder Gewebe in die Gußform des Trägerelements (4, 5, 5', 6) eingelegt werden und anschließend die Gußform mit Kunststoff gefüllt wird.

54. Verfahren nach mindestens einem der voranstehenden Ansprüche 45 bis 53, **dadurch gekennzeichnet, daß** beim Füllen der Gußform eine umlaufende Dichtung aus dem Schaumstoffteil (40) ausgeformt oder nach dem Füllen der Gußform auf den Rand des Schaumstoffteils (40) aufgespritzt wird.

## Claims

1. Support element designed for holding function units of a motor vehicle door (1) which can be connected to a supporting part (3) of the vehicle door and in which at least one part (40) of the support element (4, 5, 5', 6') consists of a foam material which has a foam core (41) and an outer skin (42), **characterised in that** the outer skin (42) and the foam core (41) are formed in one piece and the outer skin (42) has a higher strength than the foam core (41) which is surrounded by the outer skin (42).

2. Support element according to claim 1 **characterised in that** the outer skin (42) completely encloses the foam core (1).

3. Support element according to claim 1 or 2 **characterised in that** the part (40) of the support element (4, 5, 5', 6') consisting of foam is provided for holding at least one function unit (7, 8, 11, 12, 16, 50, 50a, 50b, 55, 56, 57) of the vehicle door (1).

4. Support element according to one of the preceding claims **characterised in that** the foam is formed as hard foam and that a foamed plastics is used as the foam material.

5. Support element according to one of claims 1 to 4 **characterised in that** the foam material consists of an expanded polypropylene (EPP) or an expanding polyethylene (EPE).

6. Support element according to one of the preceding claims **characterised in that** the foam part consists of a plastics which is foamed so that its hollow cavities have a constant or a reducing volume starting from a centre area of the foam part (40) towards a closed outer skin (42).

7. Support element according to claim 6 **characterised in that** the thickness of the closed outer skin (42) can be selected through the choice of ratio between the plastics used and the foaming agent and/or the temperature control of the molten plastics mass or tool.

8. Support element according to claim 6 or 7 **characterised in that** the foam part (40) consists of a plastics-sandwich body with a foam core (41) of lower density and a solid surface compact outer skin (42).

9. Support element according to one of the preceding claims **characterised in that** the function units (7, 8, 11, 12, 16, 50, 50a, 50b, 55, 56, 57) are wholly or partly injection moulded in the foam part (40).

10. Support element according to claim 9 **characterised in that** connecting parts (11, 16) for the function units (50, 50a, 50b) are integrated in one piece in the foam part (40).

11. Support element according to claim 9 or 10 **characterised in that** the support element (4, 5, 5', 6) is provided for receiving at least the parts (12, 50, 50a, 50b, 55, 56, 57) of a window lifter.

12. Support element according to one of claims 9 to 11 **characterised in that** a guide rail (50, 50a, 50b) for a window lifter is foamed into the foam part (40).

13. Support element according to claim 11 or 12 **characterised in that** the guide area of a guide rail (50, 50a, 50b) having the support faces for the follower (33) of a window lifter projects over the outer skin (42) of the foam part (40).

14. Support element according to one of the preceding claims **characterised in that** at least a fixing member is foamed into the foam part (40) and serves to produce a connection between the support element (4, 5, 5', 6) and a further component part (3) through a fixing point (53).

15. Support element according to claim 14 **characterised in that** the fixing member has a fixing point (53) which is mounted outside of the contour of the foam part (40).

16. Support element according to claim 14 or 15 **characterised in that** the fixing point (53) is formed on a guide rail (50, 50a, 50b).

17. Support element according to one of the preceding claims **characterised in that** at least one recess (5, 46, 47, 48) is provided in the foam part (40) for housing or forming at least one function unit (7, 8, 12, 56, 57) of the motor vehicle door (1).

18. Support element according to claim 17 **characterised in that** the at least one recess is formed by a hollow cavity (45, 46).

19. Support element according to claim 17 or 18 **characterised in that** the at least one recess (46, 47) is formed for receiving a drive motor (57) and/or a gearing unit (12) which is coupled to the drive motor.

20. Support element according to claim 17 **characterised in that** a guide section (48) is formed in the foam part (40) and serves to hold a door lock (7).

21. Support element according to at least one of claims 18 to 20 **characterised in that** reinforcement ribs (43, 44) branch off from the function units (7, 8, 12, 50, 50a, 50b, 55, 56, 57) or from the hollow cavities (45, 46) forming the recesses for the function units (7, 8, 12, 50, 50a, 50b, 56, 57).

22. Support element according to claim 21 **characterised in that** the reinforcement ribs (43, 44) are arranged perpendicular to the longitudinal extension of the function units (8, 50, 50a, 50b), the hollow cavities (46, 47) or of the connecting parts (11) or holding plates (16) or radiate out therefrom.

23. Support element according to one of claims 1 to 18 **characterised in that** a hollow cavity in the foam part (40) serves as an air duct or as a resonance chamber for a speaker (8).

24. Support element according to at least one of the preceding claims **characterised in that** the function units (11, 16, 50, 50a, 50b) on which forces are exerted substantially perpendicular to the surface of the support element (4, 5, 5', 6) are supported by other function units (11, 12, 50, 50a, 50b).

25. Support element according to one of the preceding claims **characterised in that** snap fit connections, guide ducts and/or assembly aids for holding or fitting function units (7, 8, 12, 50, 50a, 50b, 56, 57) or cables are integrated in the foam part (40).

26. Support element according to one of the preceding claims **characterised in that** a water drainage channel (35) is integrated in the foam part (40).

27. Support element according to one of the preceding claims **characterised in that** at least one sealing section (58) is formed on the support element (5) and serves to seal the connection between the support element (4, 5, 5', 6) and the supporting part (3) of the vehicle door (1).

28. Support element according to claim 27 **characterised in that** the sealing section (58) is formed by a sufficiently deformable area of the foam part (40).

29. Support element according to one of the preceding claims **characterised in that** at least one electric lead is integrated in the foam which serves to direct the electric current in the area of the vehicle door (1).

30. Support element according to one of the preceding claims **characterised in that** at least one reinforcement element (49, 59, 59', 59'') is integrated in the foam part (40) and serves to stabilise the support element (4, 5, 5', 6).

31. Support element according to claim 30 **characterised in that** the reinforcement element (49, 59, 59', 59'') consists of plastics or metal.

32. Support element according to claim 30 or 31 **characterised in that** the reinforcement element (49, 59, 59', 59'') serves to lead the electric current.

33. Support element according to one of the preceding claims **characterised in that** reinforcement material (20) is disposed around the foam part (40).

34. Support element according to claim 33 **characterised in that** the reinforcement material (20) is made of fibre materials such as mats or woven material.

35. Support element according to claim 33 or 34 **characterised in that** the reinforcement material (20) consists mainly of resustainable raw materials such as hemp or synthetic materials such as glass or carbon fibre.

36. Support element according to one of claims 33 to 35 **characterised in that** the reinforcement material (20) has the material of the foam part (40) passing through.

37. Support element according to one of claims 33 to 36 **characterised in that** the reinforcement material (20) is arranged on mechanically loaded spots of the support element (4, 5, 5', 6).

38. Support element according to one of the preceding claims **characterised in that** the foam part (40) has areas which serve as side impact protection for absorbing energy in a crash situation.

39. Support element according to one of the preceding claims **characterised in that** the support element (4, 5, 5', 6) is mounted between the wet space (A) and the dry space (B) of the vehicle.

40. Support element according to claim 39 **characterised in that** the support element (4, 5, 5', 6) separates the wet space (A) from the dry space (B) of the vehicle.

41. Support element according to claim 39 or 40 **characterised in that** the foam part (40) is provided with a watertight material facing the wet space (A) or dry space (B) of the vehicle.

42. Support element according to one of the preceding claims **characterised in that** the foam part (40) has areas (451, 452, 453, 454) with different wall thickness.

43. Support element according to one of the preceding claims **characterised in that** the support element (4, 5, 5', 6) is formed as a support plate of a door module which can be fixed completely assembled on the vehicle door (1).

44. Motor vehicle door having a support element according to one of the preceding claims.

45. Method for manufacturing a support element of plastics for holding function units or installation parts of a motor vehicle more particularly a motor vehicle door whereby at least one part of the support element is formed as a foam part (40) **characterised in that** the foam part (40) is made with a foam core (41) of lower density and a compact outer skin (42) formed integral thereon in the thermoplastics foam casting method (TSG) by using a plastics with an endothermic or exothermic reacting foaming additive.

46. Method according to claim 45 **characterised in that** through the choice of foaming additive and/or by controlling the cooling process the hollow cavities of the foam core (41) are constant or have a constantly reducing volume starting from a centre area of the foam part (40) towards the compact outer skin (42).

47. Method according to claim 45 or 46 **characterised in that** the density of the foam structure is increased by drawing together a casting mould and reduced by spreading apart the casting mould.

48. Method for manufacturing a support element of plastics for holding function units or installation parts of a motor vehicle more particularly a motor vehicle door wherein at least a part of the support element is formed as a plastics part **characterised in that** the foam part (40) is made with a foam core (41) of lower density and a compact outer skin (42) formed integral thereon by using an expanding polypropylene or an expanding polyethylene whereby the surfaces of the foam part (40) are melted together.

49. Method according to claim 48 **characterised in that** after filling a casting mould the surfaces of the foam part (40) are melted.

50. Method according to claim 49 **characterised in that** the melting is undertaken by heating the casting mould.

51. Method according to one of claims 45 to 50 **characterised in that** the function units are inserted into the casting mould of the foam part (40) and the mould is then filled.

52. Method according to one of claims 45 to 50 **characterised in that** the reinforcement materials (20) are inserted in the casting mould of the foam part (40) and after filling the mould are arranged on the outer faces of the foam part.

53. Method according to claim 52 **characterised in that** as reinforcement materials fibre materials or woven materials are inserted in the casting mould of the support element (4, 5, 5', 6) and then the casting mould is filled with plastics.

54. Method according to at least one of the preceding claims 45 to 53 **characterised in that** on filling the casting mould a circumferential seal is shaped out of the foam part (40) or after filling the casting mould is injected onto the edge of the foam part (40).

## Revendications

1. Élément support, réalisé pour recevoir des unités fonctionnelles d'une porte de véhicule (1), que l'on peut relier à une partie portante (3) de la porte de véhicule et dans lequel une partie au moins de l'élément support (4, 5, 5', 6) est constituée d'un matériau en mousse qui comprend un noyau de mousse (41) et une peau extérieure (42), **caractérisé en ce que** la peau extérieure (42) et le noyau de mousse (41) sont réalisés d'un seul tenant, et **en ce que** la peau extérieure (42) présente une solidité supérieure au noyau de mousse (41) enveloppé par la peau extérieure (42).

2. Élément support selon la revendication 1, **caractérisé en ce que** la peau extérieure (42) enferme entièrement le noyau de mousse (41).

3. Élément support selon l'une ou l'autre des revendications 1 et 2, **caractérisé en ce que** la partie (40) de l'élément support (4, 5, 5', 6) constituée d'un matériau en mousse est prévue pour recevoir au moins une unité fonctionnelle (7, 8, 11, 12, 16, 50, 50a, 50b, 55, 56, 57) de la porte de véhicule (1).

4. Élément support selon l'une des revendications précédentes, **caractérisé en ce que** le matériau en mousse est réalisé avec une mousse dure, et **en ce que** l'on utilise comme matériau en mousse une mousse de matière plastique.

5. Élément support selon l'une des revendications 1 à 4, **caractérisé en ce que** le matériau en mousse est constitué par un polypropylène expansé (EPP) ou par un polyéthylène expansé (EPE).

6. Élément support selon l'une des revendications précédentes, **caractérisé en ce que** la partie en mousse est réalisée en une matière plastique qui a été amenée à mousser de telle façon que ses cavités, partant d'une zone médiane de la partie en mousse (40), présentent un volume constant ou un volume qui diminue en direction d'une peau extérieure fermée (42).

7. Élément support selon la revendication 6, **caractérisé en ce que** l'épaisseur de la peau extérieure fermée (42) est choisie par le choix du rapport entre la matière plastique utilisée et l'agent propulseur et/ou par l'évolution en température de la matière plastique en fusion ou de l'outil.

8. Élément support selon l'une ou l'autre des revendications 6 et 7, **caractérisé en ce que** la partie en mousse (40) est réalisée à partir d'un corps sandwich en matière plastique comportant un noyau en mousse (41) de faible densité et une peau extérieure compacte (42) sur toute sa surface.

9. Élément support selon l'une des revendications précédentes, **caractérisé en ce que** les unités fonctionnelles (7, 8, 11, 12, 16, 50, 50a, 50b, 55, 56, 57) sont entourées totalement ou partiellement par la partie en mousse (40) lors de son injection.

10. Élément support selon la revendication 9, **caractérisé en ce que** des pièces de liaison (11, 16) pour les unités fonctionnelles (50, 50a, 50b) sont intégrées d'un seul tenant dans la partie en mousse (40).

11. Élément support selon l'une ou l'autre des revendications 9 et 10, **caractérisé en ce que** l'élément support (4, 5, 5', 6) est prévu pour recevoir au moins des parties (12, 50, 50a, 50b, 55, 56, 57) d'un lève-vitre.

12. Élément support selon l'une des revendications 9 à 11, **caractérisé en ce qu'**un rail de guidage (50, 50a, 50b) pour un lève-vitre est intégré dans la partie en mousse (40).

13. Élément support selon l'une ou l'autre des revendications 11 et 12, **caractérisé en ce que** la région de guidage d'un rail de guidage (50, 50a, 50b) dépasse au-delà de la peau extérieure (42) de la partie en mousse (40), laquelle région de guidage présente les surfaces de soutien pour les éléments d'entraînement (33) d'un lève-vitre.

14. Élément support selon l'une des revendications précédentes, **caractérisé en ce qu'**au moins un organe de fixation est intégré dans la partie en mousse (40), ledit organe de fixation servant à établir une liaison entre l'élément support (4, 5, 5', 6) et un autre composant (3) par l'intermédiaire d'un point de fixation (53).

15. Élément support selon la revendication 14, **caractérisé en ce que** l'organe de fixation comporte un point de fixation (53) qui est agencé à l'extérieur du contour de la partie en mousse (40).

16. Élément support selon l'une ou l'autre des revendications 14 et 15, **caractérisé en ce que** le point de fixation (53) est réalisé sur un rail de guidage (50, 50a, 50b).

17. Élément support selon l'une des revendications précédentes, **caractérisé en ce qu'**il est prévu dans la partie en mousse (40) au moins un évidement (45, 46, 47, 48) destiné à recevoir ou à constituer au moins une unité fonctionnelle (7, 8, 12, 56, 57) de la porte de véhicule (1).

18. Élément support selon la revendication 17, **caractérisé en ce que** ledit au moins un évidement est formé par une cavité (45, 46).

19. Élément support selon l'une ou l'autre des revendications 17 et 18, **caractérisé en ce que** ledit au moins un évidement (46, 47) est réalisé pour recevoir un moteur d'entraînement (57) et/ou une unité de transmission (12) accouplée au moteur d'entraînement.

20. Élément support selon la revendication 17, **caractérisé en ce qu'**un tronçon de guidage (48) est conformé dans la partie en mousse (40), lequel sert à recevoir une serrure de porte (7).

21. Élément support selon l'une au moins des revendications 18 à 20, **caractérisé en ce que** des nervures de renforcement (43, 44) pour des unités fonctionnelles (7, 8, 12, 50, 50a, 50b, 56, 57) sont ramifiées depuis les cavités (45, 46) qui forment les unités fonctionnelles (7, 8, 12, 50, 50a, 50b, 55, 56, 57) ou les évidements.

22. Élément support selon la revendication 21, **caractérisé en ce que** les nervures de renforcement (43, 44) sont agencées perpendiculairement à l'extension longitudinale des unités fonctionnelles (8, 50, 50a, 50b), des cavités (45, 46), ou à des pièces de liaison (11) ou des plaques de maintien (16), ou s'étendent depuis ces éléments en éventail.

23. Élément support selon l'une des revendications 1 à 18, **caractérisé en ce qu'**une cavité dans la partie en mousse (40) sert au guidage d'air, ou de chambre de résonance pour un haut-parleur (8).

24. Élément support selon l'une au moins des revendications précédentes, **caractérisé en ce que** les unités fonctionnelles (11, 16, 50, 50a, 50b), sur lesquelles s'exercent des forces essentiellement perpendiculaires à la surface de l'élément support (4, 5, 5', 6), sont soutenues par d'autres unités fonctionnelles (11, 16, 50, 50a, 50b).

25. Élément support selon l'une des revendications précédentes, **caractérisé en ce que** des liaisons à encliquetage, des canaux de guidage et/ou des auxiliaires de montage, pour recevoir ou pour monter des unités fonctionnelles (7, 8, 12, 50, 50a, 50b, 56, 57), ou des câbles sont intégrés dans la partie en mousse (40).

26. Élément support selon l'une des revendications précédentes, **caractérisé en ce qu'**une gouttière d'écoulement d'eau (35) est intégrée dans la partie en mousse (40).

27. Élément support selon l'une des revendications précédentes, **caractérisé en ce qu'**au moins un tronçon d'étanchement (58) est conformé sur l'élément support (5), lequel sert à l'étanchement de la liaison entre l'élément support (4, 5, 5', 6) et la partie portante (3) de la porte de véhicule (1).

28. Élément support selon la revendication 27, **caractérisé en ce que** le tronçon d'étanchement (58) est formé par une zone suffisamment déformable de la partie en mousse (40).

29. Élément support selon l'une des revendications précédentes, **caractérisé en ce qu'**au moins une ligne électrique est intégrée dans la mousse, laquelle sert à l'amenée du courant électrique dans la région de la porte de véhicule (1).

30. Élément support selon l'une des revendications précédentes, **caractérisé en ce qu'**au moins un élément de renforcement (49, 59, 59', 59") est intégré dans la partie en mousse (40), lequel élément de renforcement sert à stabiliser l'élément support (4, 5, 5', 6).

31. Élément support selon la revendication 30, **caractérisé en ce que** l'élément de renforcement (49, 59, 59', 59") est réalisé en matière plastique ou en métal.

32. Élément support selon l'une ou l'autre des revendications 30 et 31, **caractérisé en ce que** l'élément de renforcement (49, 59, 59', 59") sert à conduire le courant électrique.

33. Elément support selon l'une des revendications précédentes, **caractérisé en ce qu'**un matériau de renforcement (20) est agencé autour de la partie en mousse (40).

34. Élément support selon la revendication 33, **caractérisé en ce que** le matériau de renforcement (20) est réalisé en matériau fibreux, comme des nappes ou des textiles.

35. Élément support selon l'une ou l'autre des revendications 33 et 34, **caractérisé en ce que** le matériau de renforcement (20) est principalement constitué de matériau régénérable tel que du chanvre, ou de matériau synthétique tel que des fibres de verre ou des fibres de carbone.

36. Élément support selon l'une des revendications 33 à 35, **caractérisé en ce que** le matériau de renforcement (20) est traversé par le matériau de la partie en mousse (40).

37. Élément support selon l'une des revendications 33 à 36, **caractérisé en ce que** le matériau de renforcement (20) est agencé à des emplacements de l'élément support (4, 5, 5', 6) sollicités par des charges mécaniques.

38. Élément support selon l'une des revendications précédentes, **caractérisé en ce que** la partie en mousse (40) présente des zones qui servent à la protection anti-collision latérale pour encaisser de l'énergie dans le cas d'un accident.

39. Élément support selon l'une des revendications précédentes, **caractérisé en ce que** l'élément support (4, 5, 5', 6) est agencé entre l'espace humide (A) et l'espace sec (B) du véhicule.

40. Élément support selon la revendication 39, **caractérisé en ce que** l'élément porteur (4, 5, 5', 6) sépare l'espace humide (A) de l'espace sec (B) du véhicule.

41. Élément support selon l'une ou l'autre des revendications 39 est 40, **caractérisé en ce que** la partie en mousse (40) est pourvue d'un matériau étanche à l'eau en direction de l'espace humide (A) ou de l'espace sec (B) du véhicule.

42. Élément support selon l'une des revendications précédentes, **caractérisé en ce que** la partie en mousse (40) présente des zones (451, 452, 453, 454) avec des épaisseurs de parois différentes.

43. Élément support selon l'une des revendications précédentes, **caractérisé en ce que** l'élément support (4, 5, 5', 6) est réalisé sous forme de plaque porteuse d'un module de porte, susceptible d'être fixé complètement monté sur la porte de véhicule (1).

44. Porte de véhicule comprenant un élément support selon l'une des revendications précédentes.

45. Procédé pour fabriquer un élément support en matière plastique pour la réception d'unités fonctionnelles ou de parties intégrées d'un véhicule, en particulier d'une porte de véhicule, dans lequel une partie au moins de l'élément support est réalisée sous forme de partie (40) formée d'un matériau en mousse,
**caractérisé en ce que** la partie en mousse (40) est réalisée avec un noyau de mousse (41) de faible densité et avec une peau extérieure compacte (42) réalisée d'un seul tenant sur ce noyau, dans un procédé de coulée de mousse thermoplastique (TSG) en utilisant une matière plastique avec un additif d'agent propulseur réagissant de manière endothermique ou exothermique.

46. Procédé selon la revendication 45, **caractérisé en ce que**, grâce au choix de l'additif d'agent propulseur et/ou grâce à la commande du processus de refroidissement, les cavités du noyau de mousse (41) restent constantes, ou présentent un volume qui se réduit constamment, en partant d'une zone médiane de la partie en mousse (40) en direction de la peau extérieure compacte (42).

47. Procédé selon l'une ou l'autre des revendications 45 et 46, **caractérisé en ce que** la densité de la structure en mousse est augmentée par contraction d'un moule de coulée et réduite par écartement du moule de coulée.

48. Procédé pour fabriquer un élément support en matière plastique destiné à recevoir des unités fonctionnelles ou des parties intégrées d'un véhicule, en particulier d'une porte de véhicule, dans lequel une partie au moins de l'élément support est réalisée sous forme de partie en mousse,
**caractérisé en ce que** la partie en mousse (40) est réalisée avec un noyau de mousse (41) de faible densité et une peau extérieure compacte (42) réalisée d'un seul tenant sur ce noyau, en utilisant un polypropylène expansé ou un polyéthylène expansé, et **en ce que** les surfaces de la partie en mousse (41) sont amenées en fusion.

49. Procédé selon la revendication 48, **caractérisé en ce qu'**après le remplissage d'un moule de coulée, les surfaces de la partie en mousse (40) sont amenées en fusion.

50. Procédé selon la revendication 49, **caractérisé en ce que** la mise en fusion a lieu par échauffement du moule de coulée.

51. Procédé selon l'une des revendications 45 à 50, **caractérisé en ce que** les unités fonctionnelles sont mises en place dans le moule de coulée de la partie en mousse (41), et **en ce que** le moule est ensuite rempli.

52. Procédé selon l'une des revendications 45 à 50, **caractérisé en ce que** des matériaux de renforcement (20) sont mis en place dans le moule de coulée de la partie en mousse (40), ces matériaux étant agencés au niveau des surfaces extérieures de la partie en mousse après le remplissage du moule.

53. Procédé selon la revendication 52, **caractérisé en ce que** l'on met en place à titre de matériau de renforcement des matériaux fibreux ou des textiles dans le moule de coulée de l'élément support (4, 5, 5', 6), et **en ce que** l'on remplit ensuite le moule de coulée avec de la matière plastique.

54. Procédé selon l'une au moins des revendications 45 à 53, **caractérisé en ce que** lors du remplissage du moule de coulée, un joint périphérique est conformé à partir de la partie en mousse (40), ou réalisé par injection sur la bordure de la partie en mousse (40) après remplissage du moule de coulée.
